# EUROPÄISCHE PATENTSCHRIFT

(11) **EP 2 978 996 B1**
(45) Veröffentlichungstag und Bekanntmachung des Hinweises auf die Patenterteilung: **11.08.2021**
(21) Anmeldenummer: 14720478.8
(22) Anmeldetag: 21.03.2014
(51) Int. Cl.: F16H 1/32

(54) **ZYKLOIDGETRIEBE**
GEARBOX
ENGRENAGE

(30) Priorität: 25.03.2013 EP 13001506
(43) Veröffentlichungstag der Anmeldung: 03.02.2016
(73) Patentinhaber: Spinea s.r.o., 080 01 Haniska (SK)
(72) Erfinder: FECKO, Tibor, 080 01 Presov (SK)
(74) Vertreter: Jeck, Anton
(86) Internationale Anmeldenummer: PCT/EP2014/000777
(87) Internationale Veröffentlichungsnummer: WO 2014/154340

(56) Entgegenhaltungen:
- WO-A1-95/22017
- WO-A1-2008/052691
- WO-A1-2009/103557
- None

## Beschreibung

Die Erfindung betrifft ein einstufiges Zykloidgetriebe gemäß dem Oberbegriff des Anspruchs 1.

Ein einstufiges Zykloidgetriebe umfasst eine oder mehrere, jeweils versetzt zueinander mittels einer mit einer entsprechenden Anzahl gleichmäßig zueinander verdreht angeordneter Exzenter versehenen Eingangswelle exzentrisch angetriebene Zykloidenscheiben, die in einem Gehäuse abwälzen. Eine Zykloidenscheibe kann beispielsweise als ein Zahnrad mit einer Außenverzahnung oder als eine Kurvenscheibe ausgeführt sein. Der Kontakt zwischen dem Gehäuse und einer Zykloidenscheibe kann beispielsweise mittels einer Innenverzahnung ebenfalls mit Zähnen oder über Rollen- und/oder Kugellager hergestellt sein. Ein Ausgangsorgan wandelt die Bewegungen der einen oder mehreren Zykloidenscheiben bei deren Abwälzung im Gehäuse in eine Rotationsbewegung einer Ausgangswelle um. Das Ausgangsorgan kann hierzu mit der Ausgangswelle verbunden sein, diese umfassen oder von dieser umfasst sein. Das Ausgangsorgan steht dabei zur Umwandlung der Bewegungen der mindestens einen Zykloidenscheibe mit einer oder mehreren Referenzflächen der wenigstens einen Zykloidenscheibe in Wirkverbindung, beispielsweise an einer Zykloidenscheibe angeordnete Führungsbahnen und/oder Vorsprünge und/oder Nuten und/oder außermittige Durchgangsöffnungen, um nur einige denkbare Ausgestaltungen zu nennen. Dabei können Wälzlager und/oder Wälzelemente zwischen dem Ausgangsorgan und den Referenzflächen vorgesehen sein.

Eingangs- und Ausgangswelle können dabei vertauscht werden, da Zykloidgetriebe nicht selbsthemmend wirken.

Der Einfachheit halber wird im Nachfolgenden zur Erläuterung des Prinzips der Begriff Zahn stellvertretend für alle denkbare Ausgestaltungen des Kontakts zwischen Zykloidenscheibe und Gehäuse verwendet.

Ein Exzenter eines Zykloidgetriebes treibt eine Zykloidenscheibe mit n Zähnen an, die sich in einem feststehenden Gehäuse mit n+1 Zähnen abwälzt. Die Zykloidenscheibe wälzt sich dabei über die Zähne des Gehäuses ab. Je Umdrehung der Eingangswelle und damit des Exzenters bewegt sich die Zykloidenscheibe und mit ihr die Ausgangswelle um einen Zahn weiter. So entstehen kleinere Drehzahlen entgegen der Drehrichtung der Eingangswelle. Das Übersetzungsverhältnis i, für welches i=n/((n+1)-n) gilt, entspricht dabei der Anzahl n der Zähne der Zykloidenscheibe. Das Übersetzungsverhältnis i entspricht folgendem Verhältnis: Anzahl der Umdrehungen der Eingangswelle zur Anzahl der Umdrehungen der Ausgangswelle.

Um eine hohe Leistungsdichte einhergehend mit einer stets gleichmäßigen Massenverteilung zu erhalten, ist bekannt, Zykloidgetriebe mit zwei oder mehr stets gleichmäßig um die Eingangswelle verteilt angeordneten Exzentern und einer der Anzahl der Exzenter entsprechenden Anzahl von Zykloidenscheiben auszuführen. Dadurch können auch hohe Drehzahlen und hohe Kraftüber-tragungen und entsprechend hohe Leistungen bewältigt werden.

Um eine über einen vollen Durchlauf eines Zykloidgetriebes entsprechend einer vollen Umdrehung der Ausgangswelle stets gleichmäßige Massenverteilung durch eine gleichmäßig um die Eingangswelle verteilte Anordnung von zwei oder mehr Zykloidenscheiben zu ermöglichen, ist eine gerade Anzahl von Zähnen im feststehenden Gehäuse notwendig.

Einstufige Zykloidgetriebe mit zwei oder mehr gleichmäßig um die Eingangswelle verteilt angeordneten Zykloidenscheiben weisen damit ein ungerades Übersetzungsverhältnis auf. Dies erhöht die Komplexität der Steuerung eines Antriebs eines einstufigen Zykloidgetriebes mit zwei oder mehr gleichmäßig um die Eingangswelle verdreht angeordneten Zykloidenscheiben sowie der Berechnung der Voreinstellung der Drehung der Ausgangswelle, einhergehend mit einer im Vergleich zu einem geraden Übersetzungsverhältnis verringerten Genauigkeit der Steuerung und der Berechnung.

Dadurch sind solche Zykloidgetriebe nur eingeschränkt in Verbindung beispielsweise mit Stellantrieben nutzbar, bei denen zum Erhalt eines eindeutigen Verhältnisses zwischen Eingangsumdrehungen und Ausgangsumdrehungen eines Getriebes ein gerades Übersetzungsverhältnis bevorzugt wird.

Bei einem solchen einstufigen Zykloidgetriebe mit zwei oder mehr gleichmäßig um die Eingangswelle verdreht angeordneten Zykloidenscheiben kann die Herstellung und Überprüfung der Einhaltung einer vorgegebenen Geometrie der beispielsweise durch vorzugsweise Wälzelemente, wie etwa drehbare Bolzen, und dazwischenliegende Nuten gebildeten Zähne im Gehäuse besonders einfach erfolgen, weil die Zähne jeweils um 180° gegenüberliegend angeordnet sind. Darüber hinaus weisen alle Referenzflächen der Zykloidenscheiben dieselbe Ausrichtung, denselben Abstand und dieselbe Drehlage gegenüber den Zähnen am Umfang der Zykloidenscheiben auf. Dadurch werden die Zykloidenscheiben zum Erhalt einer hohen Präzision als Einheit in einer Gruppe hergestellt.

Zum Erhalt eines geraden Übersetzungsgetriebes ist bekannt, ein einstufiges Zykloidgetriebe mit einem weiteren Getriebe zu einem zwei- oder mehrstufigen Getriebe mit geradem Übersetzungsverhältnis zu kombinieren. So ist beispielsweise bekannt, einem einstufigen Zykloidgetriebe ein Stirnradgetriebe vorzuschalten oder ein einstufiges Stirnradgetriebe in ein einstufiges Zykloidgetriebe zu integrieren. Dadurch ergibt sich als Produkt des ungeraden Übersetzungsverhältnisses des einstufigen Zykloidgetriebes und des Überset-zungsverhältnisses des beispielsweise vorgeschalteten Getriebes ein gerades Übersetzungsverhältnis.

Es ist ersichtlich, dass sich durch eine Kombination eines einstufigen Zykloidgetriebes mit einem weiteren Getriebe zum Erhalt eines geraden Übersetzungsverhältnisses erhebliche Einschränkungen hinsichtlich Bauraumbedarf, Herstellungs- und Kostenaufwand sowie Komplexität des Aufbaus des zusammengesetzten Getriebes ergeben.

Durch DE 612 777 ist ein einstufiges Zykloidgetriebe mit zwei oder mehr gleichmäßig um die Eingangswelle verdreht angeordneten und gleich ausgebildeten Zykloidenscheiben bekannt.

Durch EP 1 046 456 A1 ist ein Hydraulikmotor bekannt, der entsprechend eines einstufigen Zykloidgetriebes mit einer Zykloidenscheibe ausgebildet ist. Die Zykloidenscheibe weist dabei eine gerade Anzahl von Zähnen an dessen Außenumfang und ein Gehäuse eine um eins höhere, ungerade Anzahl von Zähnen an dessen Innenumfang auf.

Durch WO 2009/103557 A1 ist ein Zykloidgetriebe bekannt. Das Zykloidgetriebe umfasst ein Gehäuse mit einer konzentrisch um eine Zylinderachse angeordneten, zylinderförmigen Gehäuseinnenwand, welche mit einer Innenverzahnung versehen ist. Außerdem umfasst das Zykloidgetriebe eine um die Zylinderachse drehbar gelagerte Eingangswelle mit mindestens zwei gleichmäßig um die Längsachse der Eingangswelle verdreht angeordneten Exzenterabschnitten gleicher Exzentrizität. Darüber hinaus umfasst das Zykloidgetriebe eine um die Zylinderachse drehbar gelagerte Ausgangswelle, wobei die Längsachsen der Eingangswelle und der Ausgangswelle mit der Zylinderachse übereinstimmen. Das Zykloidgetriebe umfasst ferner mindestens zwei Zykloidenscheiben, von denen jede Zykloidenscheibe um eine eigene, zentrale Drehachse drehbar auf einem Exzenterabschnitt angeordnet ist und über eine mit der Innenverzahnung kämmende Außenverzahnung verfügt. Die Drehachse jeder Zykloidenscheibe ist um die Exzentrizität zur Zylinderachse versetzt. Der Durchmesser der Zykloidenscheiben ist so bemessen, dass deren Außenverzahnung in einer Richtung mit der Innenverzahnung in Eingriff kommt, in welche Richtung der Exzenterabschnitt, auf dem eine Zykloidenscheibe angeordnet ist, momentan weist. In der entgegengesetzten Richtung ist die Außenverzahnung frei von einem Eingriff mit der Innenverzahnung. Das Zykloidgetriebe verfügt über mindestens ein um die Zylinderachse drehbar gelagertes Ausgangsorgan, welches die Bewegungen einer oder mehrerer Zykloidenscheiben bei deren Abwälzung im Gehäuse in eine Rotationsbewegung der Ausgangswelle umwandelt. Die Innenverzahnung des Gehäuses weist eine um eine ungerade Zahl höhere Zähnezahl auf, als jeweils die Außenverzahnungen der Zykloidenscheiben.

Der Erfindung liegt die Aufgabe zu Grunde, ein vibrationsfrei laufendes Zykloidgetriebe mit hoher Leistungsdichte zu entwickeln, welches direkt und ohne nachgeschaltetes Getriebe in Verbindung mit Stellantrieben nutzbar ist.

Die Aufgabe wird durch die Merkmale des unabhängigen Anspruchs gelöst.

Die Erfindung betrifft demnach ein Zykloidgetriebe. Das Zykloidgetriebe verfügt über ein Gehäuse. Das Gehäuse hat eine konzentrisch um eine Zylinderachse angeordnete zylinderförmige Gehäuseinnenwand. Die Gehäuseinnenwand ist mit einer Innenverzahnung versehen, deren Zähne sich parallel oder schräg zur Zylinderachse erstrecken. In dem oder an dem Gehäuse ist eine Eingangswelle drehbar gelagert. Die Eingangswelle weist zwei oder mehrere, einzeln oder gruppenweise, beispielsweise paarweise, gleichmäßig um die Längsachse der Eingangswelle verdreht angeordneten Exzenterabschnitte auf. So sind zwei Exzenterabschnitte in ihrer Drehlage um die Längsachse der Eingangswelle gleichmäßig um die Längsachse der Eingangswelle verdreht bzw. verteilt angeordnet, wenn diese in ihrer Drehlage um 180° um die Längsachse der Eingangswelle zueinander versetzt sind. Drei Exzenterabschnitte sind gleichmäßig um die Längsachse der Eingangswelle verdreht bzw. verteilt angeordnet, wenn diese um jeweils 120° um die Längsachse der Eingangswelle zueinander versetzt angeordnet sind, bei vier Exzenterabschnitten um 90° usw. Sind mehrere, beispielsweise vier, sechs, acht usw. gruppenweise, beispielsweise paarweise gleichmäßig um die Längsachse der Eingangswelle verdreht angeordnete Exzenterabschnitte vorgesehen, so weisen die zu einer Gruppe zusammengefassten Exzenterabschnitte, bei einer paarweisen Gruppierung demnach jeweils zwei Exzenterabschnitte, die selbe Drehlage auf. Gegenüber dieser Drehlage sind die verbleibenden Gruppen von Exzenterabschnitten gleichmäßig um die Längsachse der Eingangswelle zueinander versetzt angeordnet.

Alle Exzenterabschnitte weisen die gleiche Exzentrizität auf.

In dem oder an dem Gehäuse ist eine Ausgangswelle drehbar gelagert. Die Längsachsen der Eingangswelle und der Ausgangswelle stimmen mit der Zylinderachse überein.

Das Zykloidgetriebe verfügt darüber hinaus über mindestens zwei Zykloidenscheiben. Jede Zykloidenscheibe ist um eine eigene zentrale Drehachse drehbar auf einem Exzenterabschnitt der Eingangswelle angeordnet. Die Drehachse jeder Zykloidenscheibe ist dabei um die Exzentrizität der Exzenterabschnitte zur Zylinderachse versetzt. Auf jedem Exzenterabschnitt der Eingangswelle ist dieselbe Anzahl von Zykloidenscheiben drehbar angeordnet. Vorzugsweise ist auf jedem Exzenterabschnitt jeweils eine Zykloidenscheibe drehbar angeordnet.

Die Zykloidenscheiben verfügen jeweils über eine mit der Innenverzahnung der zylinderförmigen Gehäuseinnenwand kämmende Außenverzahnung. Der Durchmesser der Zykloidenscheiben ist dabei so bemessen, dass deren Außenverzahnung in einer Richtung mit der Innenverzahnung der zylinderförmigen Gehäuseinnenwand kämmend in Eingriff kommt, in welche Richtung der Exzenter, auf dem eine Zykloidenscheibe angeordnet ist, momentan weist. Dagegen ist in der entgegengesetzten Richtung die Außenverzahnung frei von einem Eingriff mit der Innenverzahnung der zylinderförmigen Gehäuseinnenwand. Dadurch können die Zykloidenscheiben auf der Gehäuseinnenwand abwälzen.

Die Zykloidenscheiben weisen an oder in zumindest einer ihrer normal zur Drehachse verlaufenden Stirnseiten jeweils Referenzflächen auf. Diese Referenzflächen dienen der Drehmomentübertragung von den Zykloidenscheiben auf mindestens ein um die Zylinderachse am oder im Gehäuse drehbar gelagertes Ausgangsorgan unter Umwandlung der Bewegungen der Zykloidenscheiben bei deren Abwälzung im Gehäuse in eine Rotationsbewegung der Ausgangswelle. Jede Referenzfläche kann einen oder mehrere in einer oder mehreren parallel zur Zylinderachse verlaufenden Ebenen liegende Flächenabschnitte umfassen. Für die Referenzflächen gilt dann allgemein, dass sie parallel zur Zylinderachse und damit auch parallel zur Rotationsachse der Zykloidenscheiben verlaufen. Eine die Zylinderachse umfassende Gerade verläuft hierbei parallel zu einer Fläche, wenn sie ganz in einer die Fläche umfassenden Ebene liegt oder diese nicht schneidet. Hierdurch können die Referenzflächen alternativ oder zusätzlich zu ebenen Flächen auch zylindrische Außenflächen von parallel zur Zylinderachse von den Zykloidenscheiben abstehenden Vorsprüngen umfassen, wie etwa Zapfen und/oder zylindrische Innenflächen von parallel zur Zylinderachse verlaufend angeordneten Ausnehmungen in den Zykloiden-scheiben, wie etwa die Innenflächen von beispielsweise in den Zykloidenscheiben vorgesehenen außermittigen Durchgangsöffnungen und/oder Sacklöchern.

Aufgrund der Lagerung der Zykloidenscheiben auf den Exzenterabschnitten führen die Zykloidenscheiben bei ihrer Abwälzung im Gehäuse hin- und hergehende Relativbewegungen orthogonal in Bezug auf die Ausgangswelle aus. Die Referenzflächen erlauben diese hin- und hergehenden Bewegungen relativ zu einer Rotationsbewegung der Ausgangswelle unter gleichzeitiger Drehmomentübertragung. Eine oder mehrere Referenzflächen können beispielsweise auf, an oder in einer oder beiden Stirnflächen einer Zykloidenscheibe angeordnete, normal zur Drehachse radial verlaufende Führungsbahnen und/oder Vorsprünge und/oder Nuten und/oder außermittig angeordnete, sich parallel zur Drehachse erstreckende Stifte und/oder Bolzen und/oder die beiden Stirnseiten einer Zykloidenscheibe miteinander verbindende außermittige Durchgangsöffnungen umfassen, um nur einige denkbare Ausgestaltungen zu nennen.

Das Zykloidgetriebe weist somit darüber hinaus mindestens ein um die Zylinderachse am oder im Gehäuse drehbar gelagertes, bereits erwähntes Ausgangsorgan auf. Das Ausgangsorgan kann aus zwei mittels Distanzkörpern miteinander verbundenen Drehkörpern gebildet sein. Die Distanzkörper können sich durch Durchgangsöffnungen in den Zykloidenscheiben hindurch erstrecken, so dass die Zykloidenscheiben des Zykloidgetriebes zwischen den Drehkörpern des Ausgangsorgans angeordnet sind.

Das mindestens eine Ausgangsorgan steht mit einer oder mehreren Referenzflächen wenigstens einer Zykloidenscheibe in derartiger Wirkverbindung, dass die Bewegungen zumindest der jeweiligen Zykloidenscheibe in Drehbewegungen der Ausgangswelle umgewandelt werden. Dabei werden die Bewegungen einer oder mehrerer Zykloidenscheiben bei deren Abwälzung im Gehäuse in eine Rotationsbewegung der Ausgangswelle umgewandelt. Mindestens ein Ausgangsorgan kann hierzu mit der Ausgangswelle verbunden sein, diese umfassen oder von dieser umfasst sein.

Das mindestens eine Ausgangsorgan kann hierzu ebenfalls über eine oder mehrere mit den Referenzflächen der Zykloidenscheiben korrespondierende Referenzflächen verfügen. Eine oder mehrere Referenzflächen des Ausgangsorgans können an, in oder auf einer normal zur Zylinderachse verlaufenden Fläche angeordnete, normal zur Zylinderachse radial verlaufende Führungsbahnen und/oder Vorsprünge und/oder Nuten und/oder außermittige Durchgangsöffnungen und/oder außermittig angeordnete, sich parallel zur Drehachse erstreckende Stifte und/oder Bolzen umfassen, um nur einige denkbare Ausgestaltungen zu nennen. Hierdurch ergeben sich korrespondierende Paare von Referenzflächen zwischen wenigstens einer Zykloidenscheibe und mindestens einem Ausgangsorgan, welche Translationsrelativbewegungen in Richtungen normal zur Zylinderachse zwischen Zykloidenscheibe und Ausgangsorgan erlauben und Rotationsrelativbewegungen um die Zylinderachse zwischen Zykloidenscheibe und Ausgangsorgan verhindern. Dabei können Wälzlager und/oder Wälzelemente zwischen den Paare bildenden Referenzflächen des Ausgangsorgans und den Referenzflächen der Zykloidenscheibe vorgesehen sein. Hierdurch werden Reibungsverluste verringert und der Wirkungsgrad des Zykloidgetriebes erhöht.

Alternativ kann ein Ausgangsorgan für eine Gruppe von zwei oder mehr gleichmäßig um die Zylinderachse verdreht angeordneten Zykloidenscheiben vorgesehen sein. Dabei ist zwischen jeder Zykloidenscheibe und dem Ausgangsorgan ein Transformationsorgan angeordnet. Hierbei verfügt das Ausgangsorgan ebenfalls wie die Zykloidenscheiben über eine oder mehrere Referenzflächen. Eine oder mehrere Referenzflächen des Ausgangsorgans können an, in oder auf einer normal zur Zylinderachse verlaufenden Fläche angeordnete, normal zur Zylinderachse radial verlaufende Führungsbahnen und/oder Vorsprünge und/oder Nuten und/oder außermittige Durchgangs-öffnungen und/oder außermittig angeordnete, sich parallel zur Drehachse erstreckende Stifte und/oder Bolzen umfassen, um nur einige denkbare Ausgestaltungen zu nennen. Die Referenzflächen der Zykloidenscheiben korrespondieren hierbei jedoch nicht mit denen des Ausgangsorgans. Stattdessen verfügt jedes Transformationsorgan über mit den Referenzflächen der jeweiligen Zykloidenscheibe korrespondierende Referenzflächen sowie über mit den Referenzflächen des Ausgangsorgans korrespondierende Referenzflächen. Hierdurch ergeben sich korrespondierende Paare von Referenzflächen zwischen jeder Zykloidenscheibe und dem dieser zugeordneten Transformationsorgan sowie korrespondierende Paare von Referenzflächen zwischen den Transformationsorganen und dem Ausgangsorgan. Die Paare von Referenzflächen erlauben Translationsrelativbewegungen in Richtungen normal zur Zylinderachse zwischen Zykloidenscheibe und Ausgangsorgan und verhindern Rotationsrelativbewegungen um die Zylinderachse zwischen Zykloidenscheibe und Ausgangsorgan. Die Transformationsorgane führen hierbei Zwischenbewegungen aus. Dabei handelt es sich bezogen auf das jeweilige Transformationsorgan um erste hin- und hergehende Zwischenbewegungen entlang einer ersten Richtung relativ zum Ausgangsorgan sowie um zweite hin- und hergehende Zwischenbewegungen entlang einer zur ersten Richtung orthogonalen zweiten Richtung relativ zur Zykloidenscheibe. Die beiden senkrecht aufeinander stehenden ersten und zweiten Richtungen liegen in einer normal zur Zylinderachse verlaufenden Ebene. Dabei können Wälzlager und/oder Wälzelemente zwischen den Paare bildenden Referenzflächen des Ausgangsorgans und den Referenzflächen der Transformationsorgane sowie zwischen den Paare bildenden Referenzflächen der Transformationsorgane und den Zykloidenscheiben vorgesehen sein. Hierdurch werden Reibungsverluste verringert und der Wirkungsgrad des Zykloidgetriebes erhöht.

Denkbare Ausgestaltungen von Transformationsorganen sind z. B. zwischen Zykloidenscheibe und Ausgangsorgan angeordnete kreuzförmige und/oder ringförmige Scheiben oder in außermittigen Durchgangsöffnungen des mindestens einen Ausgangsorgans angeordnete drehbar gelagerte Exzenterringe. Durch deren in Bezug auf deren Außenumfang exzentrisch versetztem Innenumfang verläuft je ein mit einer Zykloidenscheibe verbundener Zapfen kreisrunden Querschnitts entlang der Zylinderachse. Beispiele von Transformationsorganen sind unter anderem den Anmelder eigenen Schriften WO 95/22017 A1, WO 97/13989 A1, WO 2006/066807 A1, WO 2006/066813 A1, WO 2011/072707 A1, EP 2 255 104 B1 zu entnehmen, deren Offenbarungen explizit Bestandteil der vorliegenden Erfindung ist.

Die Paare bildenden Referenzflächen zwischen Zykloidenscheibe und Transformationsorgan können dabei grundsätzlich identisch ausgebildet sein wie die Paare bildenden Referenzflächen zwischen Transformationsorgan und Ausgangsorgan.

Auch bei einer Ausführung mit Transformationsorganen kann das Ausgangsorgan aus zwei mittels Distanzkörpern miteinander verbundenen Drehkörpern gebildet sein. Die Distanzkörper können sich durch außermittige Durchgangsöffnungen in den Zykloidenscheiben sowie ebenfalls durch außermittige Durchgangsöffnungen oder entsprechende Aussparungen in den Transformationsorganen hindurch erstrecken, so dass die Zykloidenscheiben des Zykloidgetriebes zwischen den Transformationsorganen und diese wiederum zwischen den Drehkörpern des Ausgangsorgans angeordnet sind.

Eine Zykloidenscheibe kann beispielsweise als ein Zahnrad mit einer Außenverzahnung oder als eine Kurvenscheibe ausgeführt sein. Der Kontakt zwischen dem Gehäuse und einer Zykloidenscheibe mittels der Innenverzahnung kann beispielsweise ebenfalls mit Zähnen oder über Rollen- und/oder Kugellager hergestellt sein.

Das Zykloidgetriebe zeichnet sich durch ein gerades Übersetzungsverhältnis aus.

Das gerade Übersetzungsverhältnis entspricht vorzugsweise einer Potenz von zwei, beispielsweise vier, acht, sechzehn, zweiunddreißig, vierundsechzig, einhundertachtundzwanzig, zweihundertsechsundfünfzig, fünfhundertzwölf etc.

Um das gerade Übersetzungsverhältnis zu erhalten, weisen die Zykloidenscheiben jeweils eine gerade Zähnezahl auf.

Nachdem Eingangs- und Ausgangswelle des Zykloidgetriebes grundsätzlich vertauscht werden können, so dass das Zykloidgetriebe wahlweise sowohl für eine Untersetzung ins Langsame als auch für eine Übersetzung ins Schnelle verwendet werden kann, liegt im Sinne der Erfindung ein gerades Übersetzungsverhältnis i, welches angibt, wie viele Umdrehungen der Eingangswelle erforderlich sind, um eine volle Umdrehung der Ausgangswelle zu erhalten, sowohl vor, wenn i für i>1 eine in mathematischem Sinne gerade Zahl ist, als auch, wenn der Quotient 1/i für i<1 eine in mathematischem Sinne gerade Zahl ist.

Ein gerades Übersetzungsverhältnis i liegt demnach beispielsweise vor, wenn die Außenverzahnungen der Zykloidenscheiben jeweils eine gerade Zähnezahl N und die Innenverzahnung des Gehäuses eine um eine (ganze) Zahl Z=1 höhere oder niedrigere Zähnezahl N+Z oder N-Z aufweisen und der Quotient N/Z eine in mathematischem Sinne gerade Zahl ist.

Wichtig ist an dieser Stelle hervorzuheben, dass die Innenverzahnung ein um eine ganze Zahl höhere oder niedrigere Zähnezahl aufweisen kann, welche zu einem geraden Übersetzungsverhältnis i im Sinne der zuvor angegebenen Definitionen führt.

Bei der angegebenen Zähnezahl für die Innenverzahnung handelt es sich dabei um eine im Sinne des Übersetzungsverhältnisses i vorgesehene und/oder notwendige Soll-Zähnezahl. Erfindungsgemäß kann jedoch ohne Einschränkung der Funktion und der Arbeitsweise des Zykloidgetriebes vorgesehen sein, dass beispielsweise bei gerader Soll-Zähnezahl der Innenverzahnung eine tatsächlich ausgeführte Ist-Zähnezahl der Innenverzahnung lediglich halb so viele Zähne aufweist, wie die Soll-Zähnezahl. Die Zähne der Ist-Zähnezahl sind dabei identisch ausgeführt und identisch positioniert, wie die Zähne der vorgesehenen Soll-Zähnezahl, so dass im Unterschied zur Soll-Zähnezahl bei der Ist-Zähnezahl lediglich Zahnlücken zwischen zwei benachbarten Zähnen liegen, in denen ein oder zwei identische Zähne der Innenverzahnung Platz fänden. Entsprechend ist es möglich, dass bei ungerader Ist-Zähnezahl der Innenverzahnung jeder dritte oder jeder fünfte und so weiter Zahn oder je zwei von drei oder zwei von fünf oder drei von sieben und so weiter Zähne weggelassen werden, um die Innenverzahnung ohne Einschränkung der Arbeitsweise und der Funktion des Zykloidgetriebes einfacher herzustellen.

Wenn im Folgenden von einer Zähnezahl der Innenverzahnung die Rede ist, ist damit zunächst grundsätzlich eine Soll-Zähnezahl der Innenverzahnung gemeint, es sei denn, es ist explizit etwas anderes erwähnt. Dies stellt jedoch weder eine Einschränkung dahingehend dar, dass die verschiedenen nachfolgend beschriebenen Ausführungsformen nicht mit einer Ist-Zähnezahl der Innenverzahnung, wie beschrieben, ausgeführt werden sollen, noch dass die verschiedenen nachfolgend beschriebenen Ausführungsformen nicht mit einer Soll-Zähnezahl der Innenverzahnung, wie zuvor erwähnt, ausgeführt werden können.

Die Innenverzahnung des Gehäuses weist bevorzugt eine höhere Zähnezahl auf, vorzugsweise eine um eins höhere Zähnezahl als eine Zykloidenscheibe. Damit weist die Innenverzahnung am Gehäuse vorzugsweise eine um eins höhere, ungerade Zähnezahl auf.

Um trotz ungerader Anzahl von Zähnen der Innenverzahnung und gerader Anzahl von Zähnen der Zykloidenscheiben bei zwei oder mehr Zykloidenscheiben gleichmäßig um die Eingangswelle verdreht angeordnete Exzenterabschnitte drehbar anordnen zu können, deren Bewegungen bei deren Abwälzungen auf der Gehäuseinnenfläche mittels nur eines diesen Zykloidenscheiben zugeordneten Ausgangsorgans in Rotationsbewegungen der Ausgangswelle umgewandelt werden, kann die Erfindung vorsehen, die Referenzflächen von gegeneinander um die Zylinderachse verdreht angeordneten Zykloidenscheiben gegenüber deren Außenverzahnung um einen Versatz ihrer Winkellage um deren Drehachse verdreht anzuordnen. Der Versatz der gegenseitigen Verdrehung ergibt sich durch den Quotienten der Differenz der Zähnezahl der Innenverzahnung und der Außenverzahnung zur Anzahl der in verschiedenen Drehlagen verdreht angeordneten und einem Ausgangsorgan zugeordneten Zykloidenscheiben.

Liegen zwei Zykloidenscheiben eines mit zwei gegeneinander um 180° verdreht angeordneten Zykloidenscheiben ausgestatteten erfindungsgemäßen Zykloidgetriebes bei gleicher Ausrichtung deren Referenzflächen unmittelbar übereinander und sind deren Drehachsen identisch, ist, ausgehend von einer ersten Zykloidenscheibe, die Außenverzahnung der verbleibenden zweiten Zykloidenscheibe um den Versatz verdreht gegenüber der ersten Zykloidenscheibe angeordnet.

Liegen drei oder n Zykloidenscheiben eines mit drei oder n gegeneinander um 120° oder entsprechend 360°/n verdreht angeordneten Zykloidenscheiben ausgestatteten erfindungsgemäßen Zykloidgetriebes bei gleicher Ausrichtung deren Referenzflächen unmittelbar übereinander und sind deren Drehachsen identisch, sind die Außenverzahnung der Zykloidenscheiben jeweils gegenseitig um den Versatz verdreht angeordnet.

Um trotz ungerader Anzahl von Zähnen der Innenverzahnung und gerader Anzahl von Zähnen der Zykloidenscheiben bei zwei oder mehr Zykloidenscheiben gleichmäßig um die Eingangswelle verdreht angeordnete Exzenterabschnitte drehbar anordnen zu können, deren Bewegungen bei deren Abwälzungen auf der Gehäuseinnenfläche mittels nur eines diesen Zykloidenscheiben zugeordneten Ausgangsorgans in Rotationsbewegungen der Ausgangswelle umgewandelt werden, kann die Erfindung alternativ den einzelnen Zykloidenscheiben zugeordnete ringförmige Partien der Innenverzahnung-Zykloidenscheibe zugeordnet. Damit umfasst das Zykloidgetriebe eine der Anzahl von Zykloidenscheiben entsprechende Anzahl von ringförmigen Partien der Innenverzahnung. Jede ringförmige Partie der Innenverzahnung kann dabei mit einer Verzahnung mit derselben Zähnezahl ausgeführt sein. Die Verzahnungen der gegeneinander um die Zylinderachse verdreht angeordneten Zykloidenscheiben zugeordneten ringförmigen Partien der Innenverzahnung sind dabei gegeneinander um einen Versatz ihrer Winkellage um die Zylinderachse verdreht angeordnet. Der Versatz der gegenseitigen Verdrehung ergibt sich durch den Quotienten der Differenz der Zähnezahl der Innenverzahnung und der Außenverzahnung zur Anzahl der in verschiedenen Drehlagen verdreht angeordneten und einem Ausgangsorgan zugeordneten Zykloidenscheiben.

Sind zwei gegeneinander um 180° verdreht angeordnete Zykloidenscheiben vorgesehen, so sind zwei ringförmige Partien der Innenverzahnung vorgesehen, deren Verzahnungen gegeneinander um den Versatz um die Zylinderachse verdreht an der Gehäuseinnenwand angeordnet sind.

Sind drei oder mehr verdreht angeordnete Zykloidenscheiben vorgesehen, so sind entsprechend drei oder mehr ringförmige Partien der Innenverzahnung vorgesehen, deren Verzahnungen gleichmäßig gegeneinander um den Versatz um die Zylinderachse verdreht an der Gehäuseinnenwand angeordnet sind.

Um trotz ungerader Anzahl von Zähnen der Innenverzahnung und gerader Anzahl von Zähnen der Zykloidenscheiben bei zwei oder mehr Zykloidenscheiben gleichmäßig um die Eingangswelle verdreht angeordnete Exzenterabschnitte drehbar anordnen zu können, deren Bewegungen bei deren Abwälzungen auf der Gehäuseinnenfläche mittels nur eines diesen Zykloidenscheiben zugeordneten Ausgangsorgans in Rotationsbewegungen der Ausgangswelle umgewandelt werden, kann die Erfindung gemäß einer dritten Alternative eine gerade Zähnezahldifferenz der Innenverzahnung am Gehäuse und der Außenverzahnungen der Zykloidenscheiben vorsehen.

Es ist ersichtlich, dass die Erfindung verwirklicht sein kann durch ein einstufiges Zykloidgetriebe umfassend zwei oder mehrere jeweils versetzt zueinander mittels einer mit einer entsprechenden Anzahl gleichmäßig zueinander verdreht angeordneter Exzenter versehenen Eingangswelle exzentrisch angetriebene Zykloidenscheiben, die in einem Gehäuse abwälzen. Eine Zykloidenscheibe kann beispielsweise als ein Zahnrad mit einer Außenverzahnung oder als eine Kurvenscheibe ausgeführt sein. Der Kontakt zwischen dem Gehäuse und einer Zykloidenscheibe kann beispielsweise mittels einer Innenverzahnung ebenfalls mit Zähnen oder über Rollen- und/oder Kugellager hergestellt sein. Ein Ausgangsorgen wandelt die Bewegungen der einen oder mehreren Zykloidenscheiben bei deren Abwälzung im Gehäuse in eine Rotationsbewegung einer Ausgangswelle um. Das Ausgangsorgan steht dabei zur Umwandlung der Bewegungen der mindestens einen Zykloidenscheibe mit einer oder mehreren Referenzflächen der wenigstens einen Zykloidenscheibe in Wirkverbindung, beispielsweise an einer Zykloidenscheibe angeordnete Führungsbahnen und/oder Vorsprünge und/oder Nuten und/oder außermittige Durchgangsöffnungen, um nur einige denkbare Ausgestaltungen zu nennen. Dabei können Wälzlager und/oder Wälzelemente zwischen dem Ausgangsorgan und den Referenzflächen vorgesehen sein. Die Zykloidenscheiben weisen jeweils eine gerade Zähnezahl auf, wohingegen das Gehäuse eine Innenverzahnung mit einer ungeraden Zähnezahl aufweist. Um eine gleichmäßig verdrehte Anordnung der zwei oder mehreren Zykloidenscheiben um die Eingangswelle zu ermöglichen, sind die Referenzflächen von gegeneinander verdreht angeordneten Zykloidenscheiben gegenüber deren Außenverzahnung um einen Versatz ihrer Winkellage um deren Drehachse verdreht angeordnet. Der Versatz der gegenseitigen Verdrehung ergibt sich durch den Quotienten der Differenz der Zähnezahl der Innenverzahnung und der Außenverzahnung zur Anzahl der in verschiedenen Drehlagen verdreht angeordneten Zykloidenscheiben.

Sind beispielsweise zwei, vier oder acht etc. um 180° versetzt angeordnete Zykloidenscheiben bei einer Differenz der Zähnezahl der Innenverzahnung und der Außenverzahnung von eins vorgesehen, so sind die Referenzflächen der einen Hälfte der jeweils um 180° gegeneinander verdreht angeordneten Zykloidenscheiben gegenüber den Zähnen, deren Außenverzahnung im Vergleich zur anderen Hälfte der jeweils um 180° gegeneinander verdreht angeordneten Zykloidenscheiben, um einen halben Zahn versetzt angeordnet.

Sind beispielsweise drei, sechs oder neun etc. um 120° versetzt angeordnete Zykloidenscheiben bei einer Differenz der Zähnezahl der Innenverzahnung und der Außenverzahnung von eins vorgesehen, so sind die Referenzflächen jeden Drittels der jeweils um 120° gegeneinander verdreht angeordneten Zykloidenscheiben gegenüber den Zähnen, deren Außenverzahnung im Vergleich zu den verbleibenden Dritteln der jeweils um 120° gegeneinander verdreht angeordneten Zykloidenscheiben, um einen drittel Zahn versetzt angeordnet.

Vorteile gegenüber dem Stand der Technik sind neben einer Behebung der Eingangs genannten Nachteile des Stands der Technik ein gerades Übersetzungsverhältnis, mit dem beispielsweise auch für Stellantriebe besonders geeignete Übersetzungsverhältnisse einer Potenz von zwei verwirklicht werden können.

Zusätzliche Vorteile gegenüber dem Stand der Technik sind eine Verringerung der Komplexität der Steuerung eines Antriebs eines einstufigen Zykloidgetriebes mit zwei oder mehr gleichmäßig um die Eingangswelle verdreht angeordneten Zykloidenscheiben sowie die Berechnung der Voreinstellung der Drehung der Ausgangswelle. Diese geht einher mit einer im Vergleich zu einem ungeraden Übersetzungsverhältnis erhöhten Genauigkeit der Steuerung und der Berechnung.

Die Erfindung wird nachfolgend anhand von in den Zeichnungen dargestellten Ausführungsbeispielen näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:

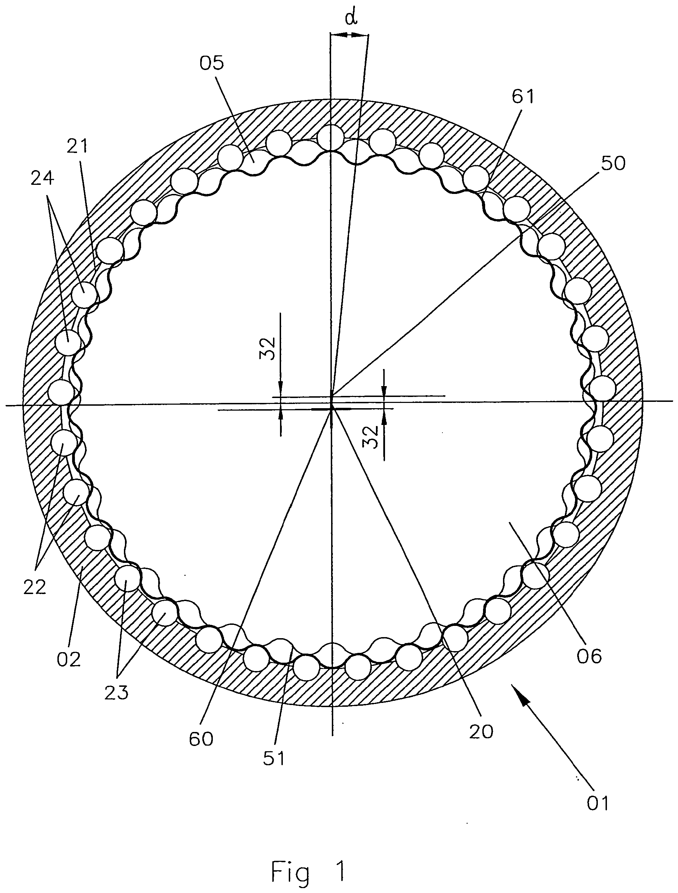

- Fig. 1: ein erstes Ausführungsbeispiel eines Zykloidgetriebes mit zwei um 180° zueinander versetzt angeordneten Zykloidenscheiben in einem Querschnitt normal zur Zylinderachse,

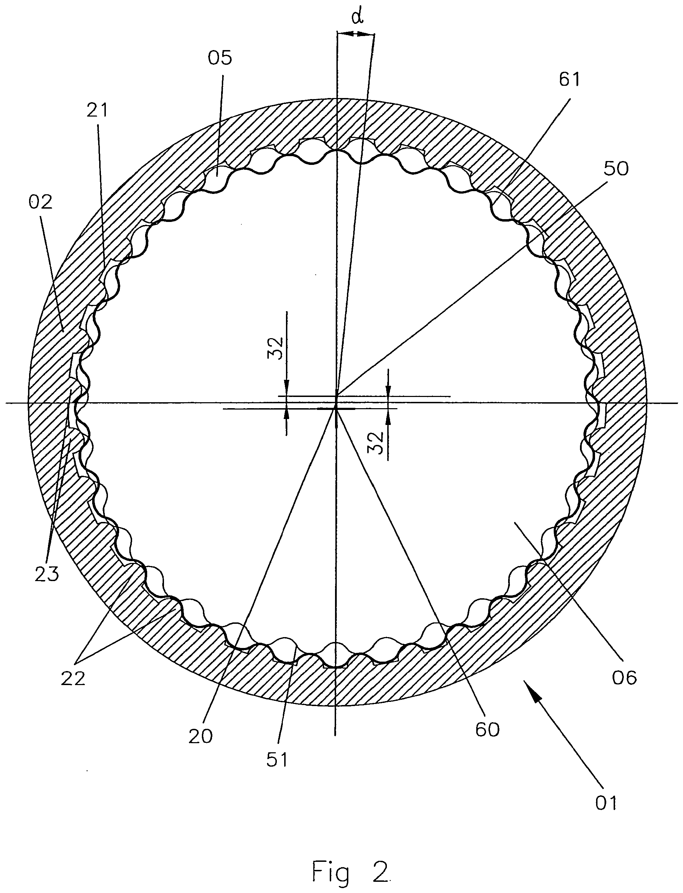

- Fig. 2: ein zweites Ausführungsbeispiel eines Zykloidgetriebes mit zwei um 180° zueinander versetzt angeordneten Zykloidenscheiben in einem Querschnitt normal zur Zylinderachse,

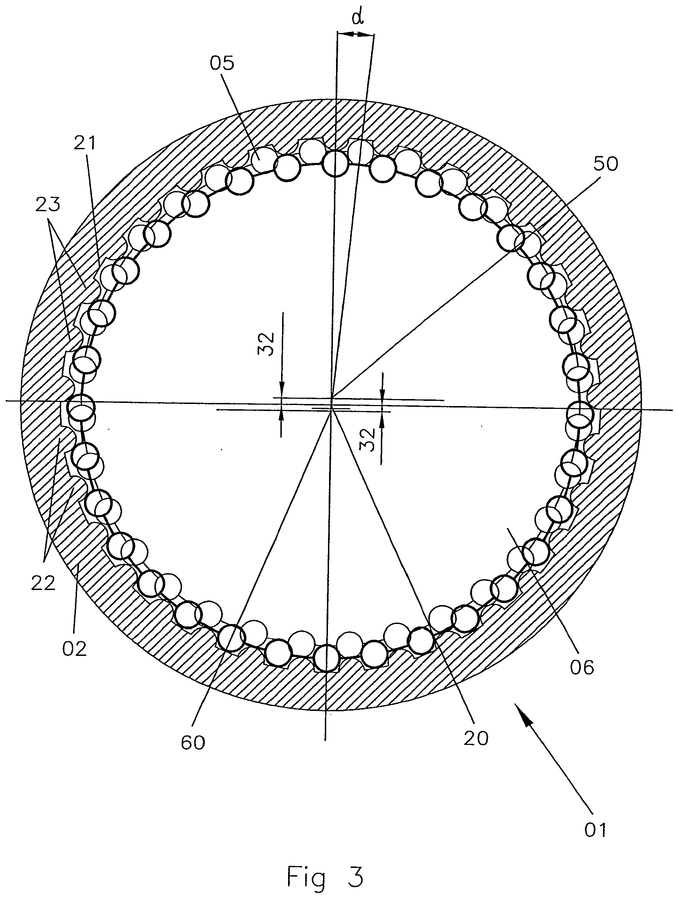

- Fig. 3: ein drittes Ausführungsbeispiel eines Zykloidgetriebes mit zwei um 180° zueinander versetzt angeordneten Zykloidenscheiben in einem Querschnitt normal zur Zylinderachse,

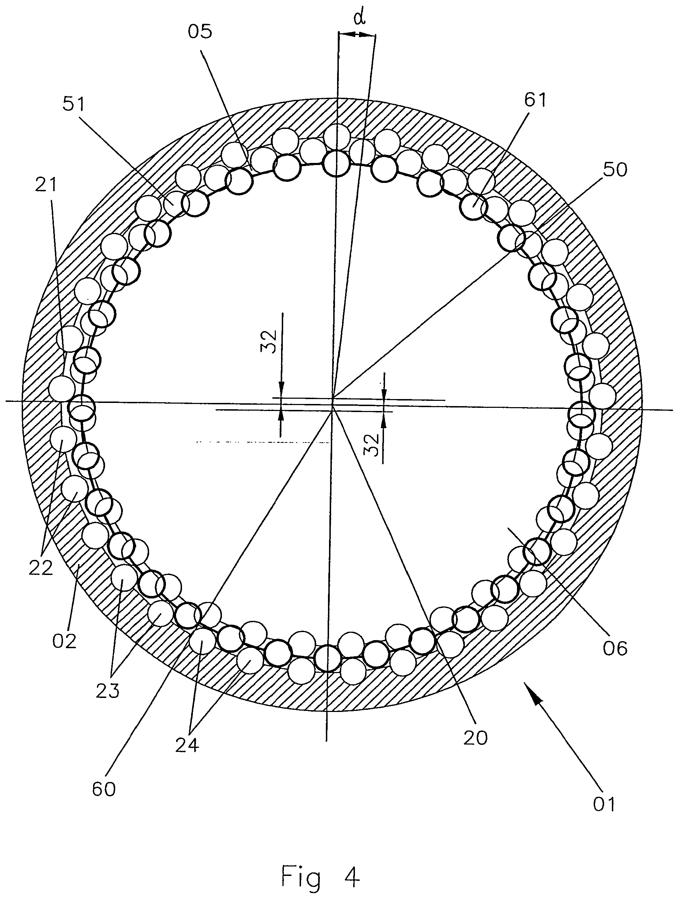

- Fig. 4: ein viertes Ausführungsbeispiel eines Zykloidgetriebes mit zwei um 180° zueinander versetzt angeordneten Zykloiden-scheiben in einem Querschnitt normal zur Zylinderachse,

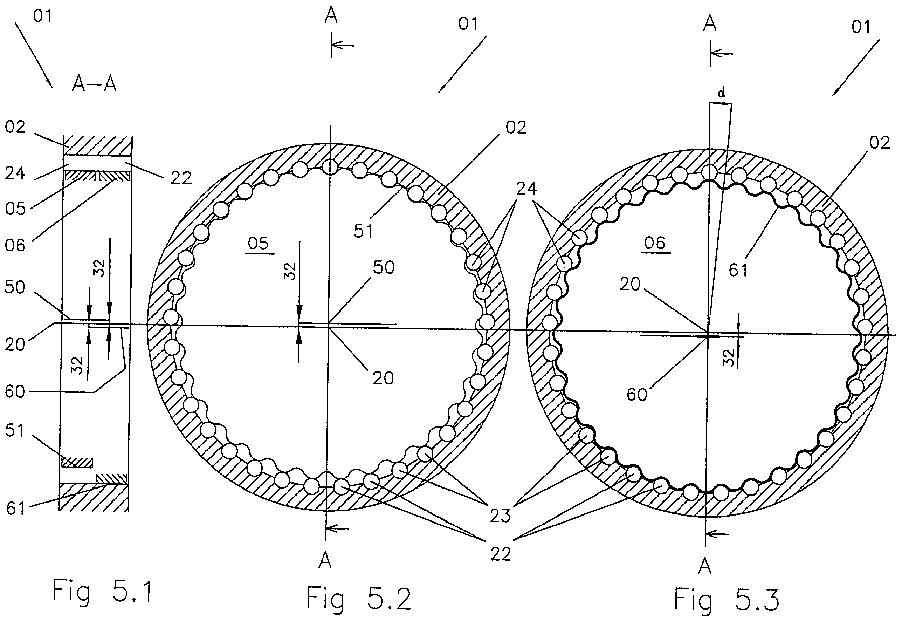

- Fig. 5: ein fünftes Ausführungsbeispiel eines Zykloidgetriebes mit zwei um 180° zueinander versetzt angeordneten Zykloidenscheiben in einem Längsschnitt parallel zur Zylinderachse in Fig. 5.1, in einem eine erste Zykloidenscheibe zeigenden ersten Querschnitt normal zur Zylinderachse in Fig. 5.2 sowie in einem eine zweite Zykloidenscheibe zeigenden zweiten Querschnitt normal zur Zylinderachse in Fig. 5.3,

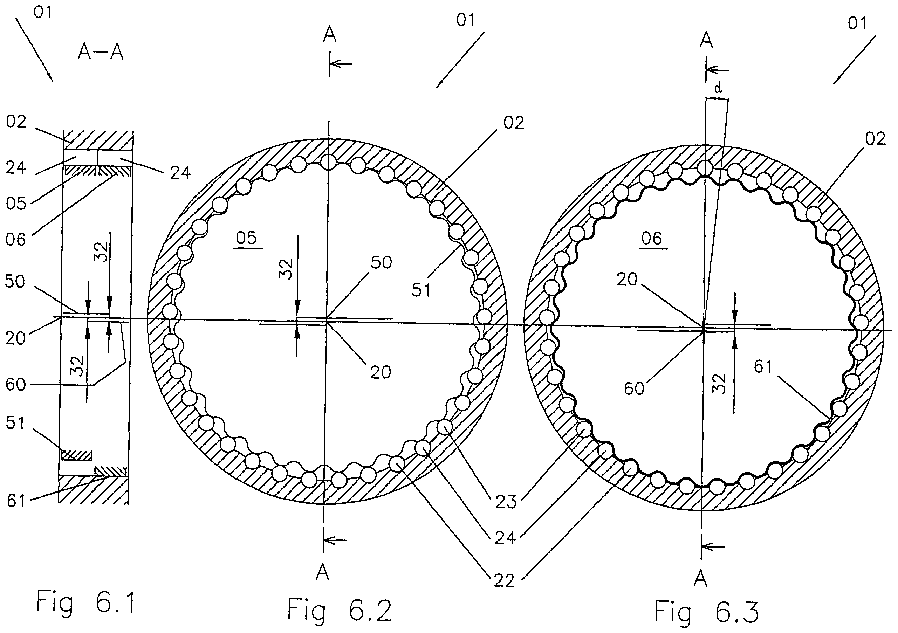

- Fig. 6: ein sechstes Ausführungsbeispiel eines Zykloidgetriebes mit zwei um 180° zueinander versetzt angeordneten Zykloidenscheiben in einem Längsschnitt parallel zur Zylinderachse in Fig. 6.1, in einem eine erste Zykloidenscheibe zeigenden ersten Querschnitt normal zur Zylinderachse in Fig. 6.2 sowie in einem eine zweite Zykloidenscheibe zeigenden zweiten Querschnitt normal zur Zylinderachse in Fig. 6.3,

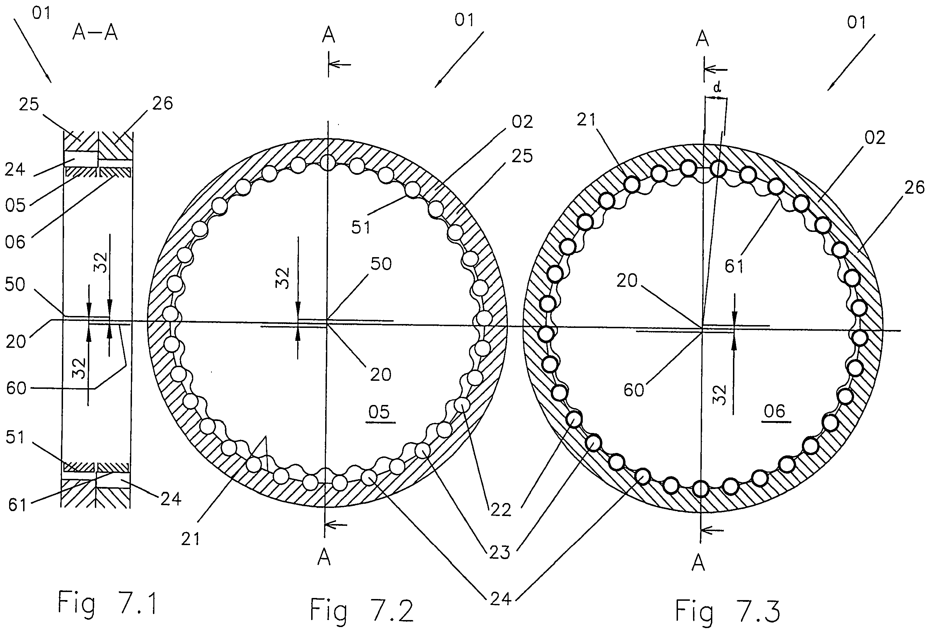

- Fig. 7: ein siebtes Ausführungsbeispiel eines Zykloidgetriebes mit zwei um 180° zueinander versetzt angeordneten Zykloidenscheiben in einem Längsschnitt parallel zur Zylinderachse in Fig. 7.1, in einem eine erste Zykloidenscheibe zeigenden ersten Querschnitt normal zur Zylinderachse in Fig. 7.2 sowie in einem eine zweite Zykloidenscheibe zeigenden zweiten Querschnitt normal zur Zylinderachse in Fig. 7.3,

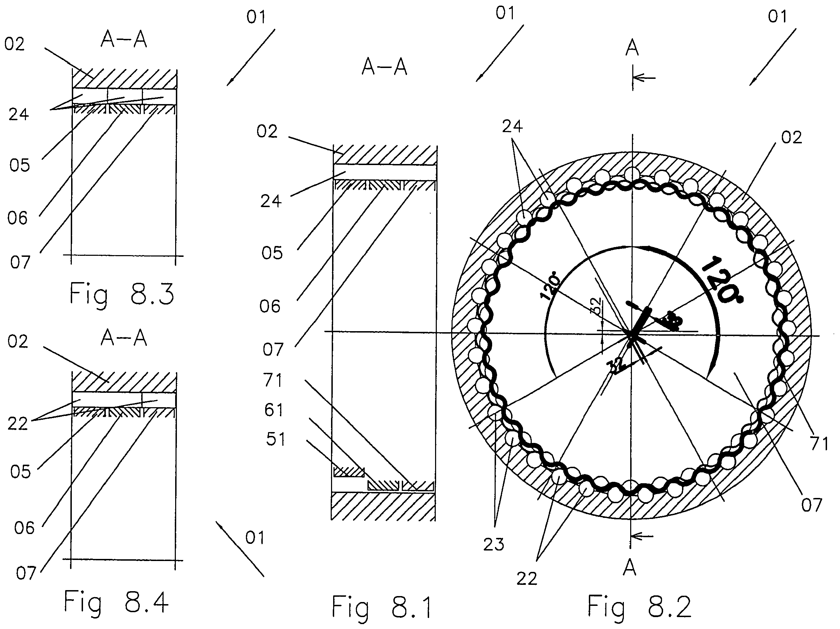

- Fig. 8: ein achtes Ausführungsbeispiel eines Zykloidgetriebes mit drei um 120° zueinander versetzt angeordneten Zykloidenscheiben in einem Längsschnitt parallel zur Zylinderachse in Fig. 8.1, in einem die Lagen der Zykloidenscheiben zeigenden Querschnitt normal zur Zylinderachse in Fig. 8.2 sowie alternative Ausgestaltungen der Innenverzahnungen des Zykloidgetriebes in einem Längsschnitt parallel zur Zylinderachse in Fig. 8.3 und in Fig. 8.4,

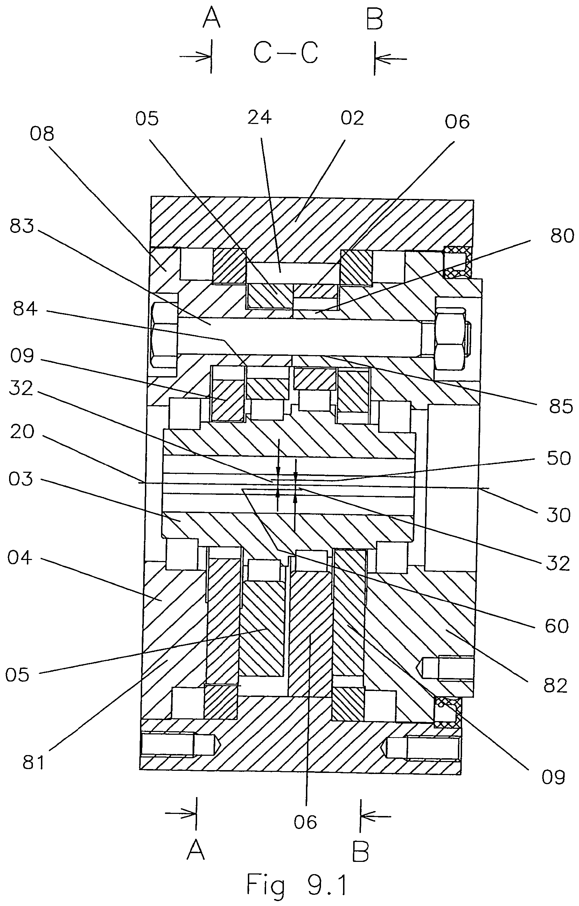

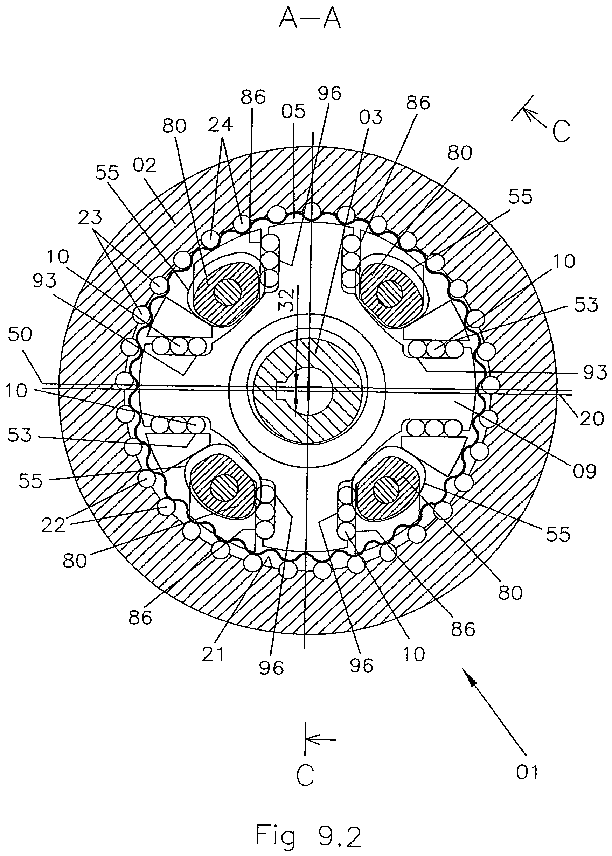

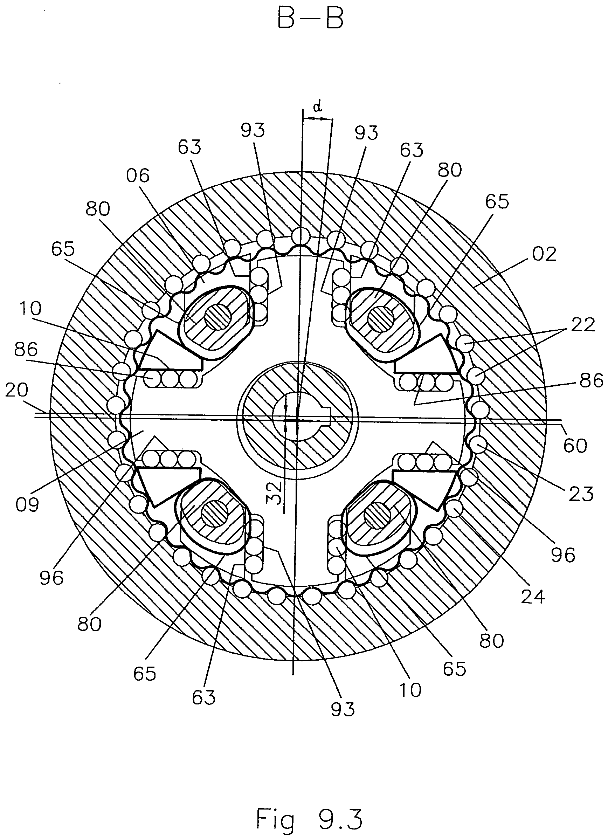

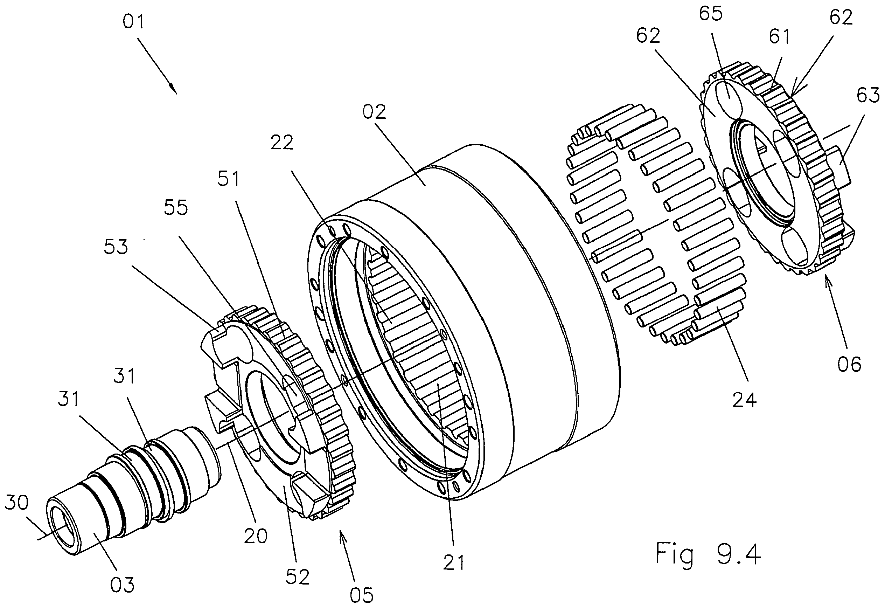

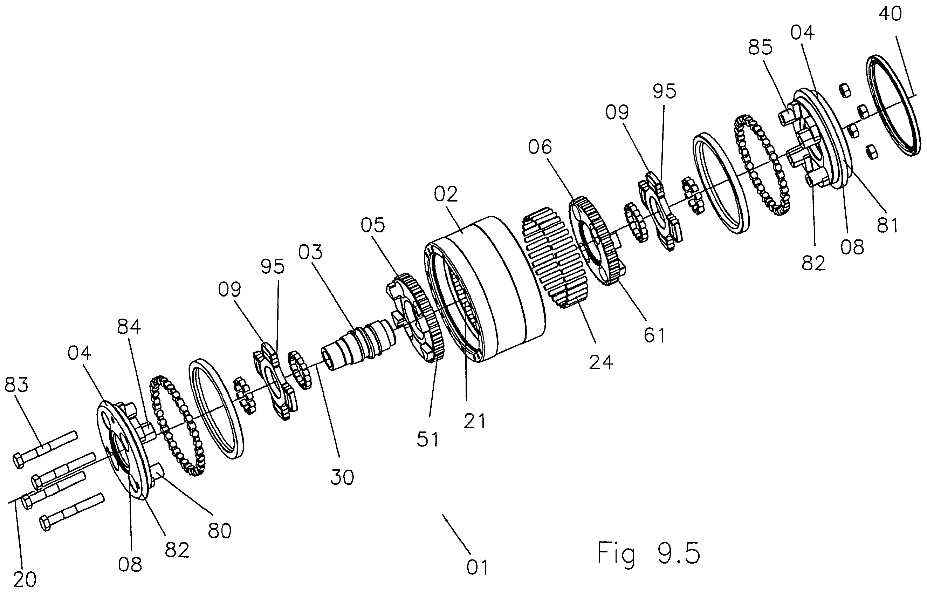

- Fig. 9: ein neuntes Ausführungsbeispiel eines Zykloidgetriebes mit zwei um 180° zueinander versetzt angeordneten Zykloidenscheiben sowie Transformationsorganen in einem Längsschnitt parallel zur Zylinderachse in Fig. 9.1, in einem eine erste Zykloidenscheibe und ein dieser zugeordnetes erstes Transformationsorgan zeigenden ersten Querschnitt normal zur Zylinderachse in Fig. 9.2, in einem eine zweite Zykloidenscheibe und ein dieser zugeordnetes zweites Transformationsorgan zeigenden zweiten Querschnitt normal zur Zylinderachse in Fig. 9.3, in einer perspektivischen Ansicht nur dessen Gehäuses, der Innenverzahnung, der zwei um 180° zueinander versetzt angeordneten Zykloidenscheiben, einer Eingangswelle mit zwei gleichmäßig um deren Längsachse verdreht angeordneten Exzenterabschnitten gleicher Exzentrizität in Fig. 9.4, sowie einer Explosionsdarstellung des Zykloidgetriebes in perspektivischer Ansicht in Fig. 9.5.

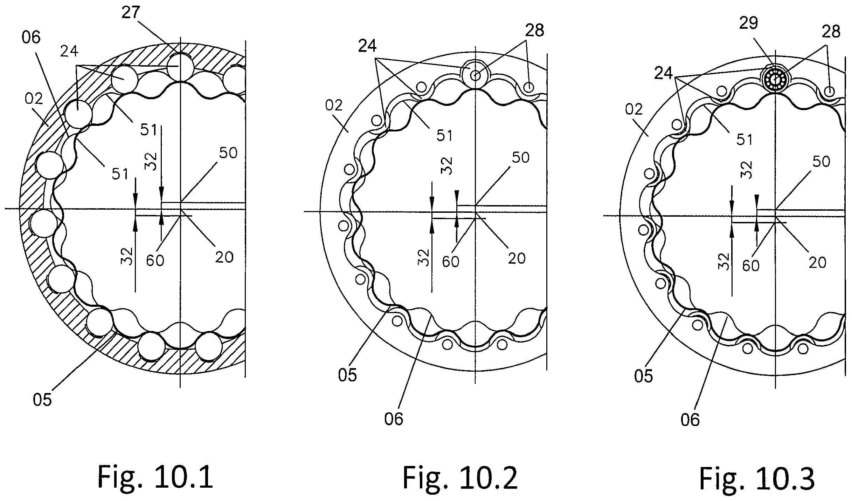

- Fig. 10: Ausführungsbeispiele für die Ausgestaltung der Innenverzahnung des Gehäuses mit drehbar gelagerten Bolzen als Zähne der Innenverzahnung in Fig. 10.1, mit drehbar gelagerten Rollen als Zähne der Innenverzahnung in Fig. 10.2 und mit drehbaren Kugellagern als Zähne der Innenverzahnung in Fig. 10.3, jeweils in einem Querschnitt normal zur Zylinderachse.

Ein in den Fig. 1 bis Fig. 9 ganz oder in Teilen dargestelltes Zykloidgetriebe 01 umfasst ein Gehäuse 02 mit einer konzentrisch um eine in Fig. 1, Fig. 2, Fig. 3, Fig. 4, Fig. 5.2, Fig. 5.3, Fig. 6.2, Fig. 6.3, Fig. 7.2, Fig. 7.3, Fig. 8.2, Fig. 9.2 und Fig. 9.3 senkrecht auf der Zeichenebene aufstehenden Zylinderachse 20 angeordneten, (hohl-) zylinderförmigen Gehäuseinnenwand 21. Die Gehäuseinnenwand 21 ist mit einer Innenverzahnung 22 versehen. Die Zähne 23 der Innenverzahnung 22 können sich parallel oder schräg bzw. windschief zur Zylinderachse 20 erstrecken.

Das Zykloidgetriebe 01 umfasst ferner eine im oder am Gehäuse 02 um die Zylinderachse 20 drehbar gelagerte Eingangswelle 03 mit mindestens zwei einzeln oder gruppenweise, beispielsweise paarweise, gleichmäßig um die mit der Zylinderachse 20 übereinstimmende Längsachse 30 der Eingangswelle 03 verdreht angeordneten Exzenterabschnitten 31 gleicher Exzentrizität 32.

Darüber hinaus umfasst das Zykloidgetriebe 01 eine im oder am Gehäuse 02 um die Zylinderachse 20 drehbar gelagerte Ausgangswelle 04. Die Längsachse 40 der Ausgangswelle 04 stimmt dabei mit der Zylinderachse 20 überein.

Außerdem umfasst das Zykloidgetriebe 01 mindestens zwei Zykloidenscheiben 05, 06, 07. Jede Zykloidenscheibe 05, 06, 07 ist um eine eigene, zentrale Drehachse 50, 60, 70 drehbar auf einem Exzenterabschnitt 31 der Eingangswelle 03 angeordnet. Jede Zykloidenscheibe 05, 06, 07 verfügt über eine mit der Innenverzahnung 22 der zylinderförmigen Gehäuseinnenwand 21 kämmende Außenverzahnung 51, 61, 71. Die Drehachse 50, 60, 70 jeder Zykloidenscheibe 05, 06, 07 ist um die Exzentrizität 32 der Exzenterabschnitte 31 zur Zylinderachse 20 versetzt. Der Durchmesser der Zykloidenscheiben 05, 06, 07 ist so bemessen, dass deren Außenverzahnung 51, 61, 71 in einer Richtung mit der Innenverzahnung 22 der zylinderförmigen Gehäuseinnenwand 21 kämmend in Eingriff kommt, in welche Richtung der Exzenterabschnitt 31, auf dem eine Zykloidenscheibe 05, 06, 07 angeordnet ist, momentan weist, wohingegen in der entgegengesetzten Richtung die Außenverzahnung 51, 61, 71 frei von einem Eingriff mit der Innenverzahnung 22 der zylinderförmigen Gehäuseinnenwand 21 ist. Dadurch können die Zykloidenscheiben 05, 06, 07 auf der Gehäuseinnenwand 21 abwälzen.

Die Zykloidenscheiben 05, 06, 07 weisen an oder in zumindest einer ihrer normal zu deren Drehachse 50, 60, 70 verlaufenden Stirnseiten 52, 62 jeweils Referenzflächen 53, 63 auf.

Aufgrund der Lagerung der Zykloidenscheiben 05, 06, 07 auf den Exzenterabschnitten führen die Zykloidenscheiben 05, 06, 07 bei deren Abwälzung im Gehäuse 02 hin- und hergehende Relativbewegungen orthogonal in Bezug auf die Ausgangswelle 04 aus. Die Referenzflächen 53, 63 dienen der Drehmomentübertragung von den Zykloidenscheiben 05, 06, 07 auf mindestens ein um die Zylinderachse 20 an oder im Gehäuse 02 drehbar gelagertes Ausgangsorgan 08 unter Umwandlung der Bewegungen der Zykloidenscheiben 05, 06, 07 bei deren Abwälzung im Gehäuse 02 in eine Rotationsbewegung der Ausgangswelle 04. Jede Referenzfläche 53, 63 kann einen oder mehrere in einer oder mehreren parallel zur Zylinderachse 20 verlaufenden Ebenen liegende Flächenabschnitte umfassen. Somit gilt für die Referenzflächen 53, 63 allgemein, dass sie parallel zur Zylinderachse 20 und damit auch parallel zur Drehachse 50, 60, 70 der Zykloidenscheiben 05, 06, 07 verlaufen. Eine die Zylinderachse 20 umfassende Gerade ist hierbei parallel zu einer Fläche, wenn sie ganz in einer die Fläche umfassenden Ebene liegt oder diese nicht schneidet. Hierdurch können die Referenzflächen 53, 63 alternativ oder zusätzlich zu ebenen Flächen auch zylindrische Außenflächen von parallel zur Zylinderachse 20 von den Zykloidenscheiben 05, 06, 07 abstehenden Vorsprüngen, wie etwa normal auf einer oder beiden Stirnseiten 52, 62 der Zykloidenscheiben 05, 06, 07 aufstehende Zapfen und/oder zylindrische Innenflächen von parallel zur Zylinderachse 20 verlaufend angeordneten Ausnehmungen in den Zykloidenscheiben 05, 06, 07, wie etwa die Innenflächen von beispielsweise in den Zykloidenscheiben 05, 06, 07 vorgesehenen außermittigen Durchgangsöffnungen 55, 65 und/oder Sacklöchern umfassen. Die Referenzflächen 53, 63 erlauben diese hin- und hergehenden Bewegungen relativ zu einer Rotationsbewegung der Ausgangswelle 04 unter gleichzeitiger Drehmomentübertragung.

Das Zykloidgetriebe 01 umfasst wie bereits erwähnt zudem mindestens ein um die Zylinderachse 20 drehbar gelagertes Ausgangsorgan 08, welches mit einer oder mehreren Referenzflächen 53, 63 wenigstens einer Zykloidenscheibe 05, 06, 07 in derartiger Wirkverbindung steht, dass die Bewegungen einer oder mehrerer Zykloidenscheiben 05, 06, 07 bei deren Abwälzung im Gehäuse 02 in eine Rotationsbewegung der Ausgangswelle 04 umgewandelt werden.

Die in den Fig. 1 bis Fig. 9 ganz oder in Teilen dargestellten Zykloidgetriebe 01 zeichnen sich durch ein gerades Übersetzungsverhältnis aus. Die Zykloidenscheiben 05, 06, 07 weisen hierbei jeweils eine gerade Zähnezahl N ihrer Außenverzahnungen 51, 61, 71 auf.

Bei der Zähnezahl N handelt es sich um eine ganze Zahl in mathematischem Sinne, welche gerade heißt, wenn sie ohne Rest durch zwei teilbar ist. Andernfalls heißt sie ungerade.

Um ein gerades Übersetzungsverhältnis zu erhalten, weist die Innenverzahnung 22 des Gehäuses 02 eine um eine ganze Zahl Z höhere oder niedrigere Zähnezahl N+Z bzw. N-Z auf als jeweils die Außenverzahnungen 51, 61, 71 der Zykloidenscheiben 05, 06, 07.

Die jeweils auf einem Exzenterabschnitt 31 der Eingangswelle 03 des Zykloidgetriebes 01 angeordneten Zykloidenscheiben 05, 06, 07 mit jeweils N Zähnen wälzen sich in dem feststehenden Gehäuse 02 mit N+Z oder mit N-Z Zähnen über die Zähne des Gehäuses 02 ab. Je Umdrehung der Eingangswelle 03 und damit der Exzenterabschnitte 31 bewegen sich die Zykloidenscheiben 05, 06, 07 und mit ihnen die Ausgangswelle 04 um Z Zähne weiter. So entstehen kleinere Drehzahlen entgegen der Drehrichtung der Eingangswelle 03. Das Übersetzungsverhältnis i, für welches i= abs (N/((N+Z)-N) bzw. i= abs (N/((N-Z)-N) gilt, entspricht dabei dem Quotienten der Anzahl N der Zähne der Zykloidenscheibe 05, 06, 07 zur Differenz der Zähnezahl N+Z bzw. N-Z der Innenverzahnung 22 des Gehäuses 02 und der Anzahl N der Zähne der Zykloidenscheibe 05, 06, 07. Hieraus ergibt sich für das Übersetzungsverhältnis i der Quotient der Anzahl N der Zähne der Zykloidenscheibe 05, 06, 07 zur gegenüber der Zykloidenscheibe 05, 06, 07 höheren oder niedrigeren Zähnezahl Z der Innenverzahnung 22 des Gehäuses 02 entsprechend i= abs (N/Z).

Eingangs- und Ausgangswelle eines Zykloidgetriebes können vertauscht werden, da Zykloidgetriebe nicht selbsthemmend wirken. Das Übersetzungsverhältnis i, welches angibt, wie viele Umdrehungen der Eingangswelle 03 erforderlich sind, um eine volle Umdrehung der Ausgangswelle 04 zu erhalten, ist gerade im Sinne der Erfindung, wenn das Ergebnis i= abs (N/Z) eine gerade Zahl in mathematischem Sinne ist, unabhängig davon, ob Eingangs- 03 und Ausgangswelle 04 vertauscht werden.

Die Zykloidenscheiben 05, 06, 07, die in dem Gehäuse 02 abwälzen, können beispielsweise jeweils als ein Zahnrad mit einer Außenverzahnung 51, 61 oder als eine Kurvenscheibe ausgeführt sein. Der Kontakt zwischen dem Gehäuse 02 und einer Zykloidenscheibe 05, 06, 07 kann beispielsweise mittels einer Innenverzahnung 22 ebenfalls mit Zähnen 23 oder, wie in Fig. 10 dargestellt, über unter dem Begriff Rollenelement 24 zusammengefasst drehbar gelagerte Bolzen (Fig. 10.1), drehbar gelagerte Rollen (Fig. 10.2) und/oder drehbare Kugellager (Fig. 10.3) hergestellt sein. Auch andere Ausführungen von Verzahnungen zwischen Zykloidenscheiben 05, 06, 07 und Gehäuse 02, welche erlauben, dass die Zykloidenscheiben 05, 06, 07 formschlüssig kämmend in Eingriff mit dem Gehäuse 02 stehend in dem Gehäuse 02 abwälzen, sind denkbar. Diese ermöglichen beispielsweise eine zackenförmige, formschlüssige Verbindung zur Kraft- und Bewegungsübertragung.

Der Einfachheit halber werden im Nachfolgenden die Begriffe Zahn und Verzahnung auch stellvertretend für alle denkbare Ausgestaltungen des Kontakts zwischen Zykloidenscheibe 05, 06, 07 und Gehäuse 02 verwendet, es sei denn, es wird explizit auf eine spezielle Ausgestaltung eingegangen.

Die Zykloidenscheiben 05, 06, 07 mit ihrer Außenverzahnung 51, 61, 71 können, wie in Fig. 3 und Fig. 4 dargestellt, als Zahnräder oder, wie in Fig. 1, Fig. 2 und Fig. 10 dargestellt, als Kurvenscheiben ausgeführt sein.

Der Kontakt zwischen dem Gehäuse 02 und einer Zykloidenscheibe 05, 06, 07 kann, wie in Fig. 2 und Fig. 3 dargestellt, mittels der Innenverzahnung 22 mit festen Zähnen 23 oder, wie in Fig. 1 und Fig. 4 dargestellt, mittels der Innenverzahnung 22 mit Rollenelemente 24 und/oder Kugellagerelemente umfassenden drehbaren Zähnen 23 hergestellt sein.

Das gerade Übersetzungsverhältnis i entspricht vorzugsweise einer Potenz von zwei, beispielsweise vier, acht, sechzehn, zweiunddreißig, vierundsechzig, einhundertachtundzwanzig, zweihundertsechsundfünfzig, fünfhundertzwölf etc.

Die Innenverzahnung 22 des Gehäuses 02 weist vorzugsweise, wie in den Fig. 1 bis Fig. 9 dargestellt, eine um eine ungerade Zahl höhere Zähnezahl auf als jeweils die Außenverzahnungen 51, 61, 71 der Zykloidenscheiben 05, 06, 07. Vorzugsweise handelt es sich dabei um eine um eins höhere Zähnezahl als die einer Außenverzahnung 51, 61, 71 einer Zykloidenscheibe 05, 06, 07. Damit weist die Innenverzahnung 22 am Gehäuse 02 vorzugsweise eine um eins höhere ungerade Zähnezahl auf.

Ausgehend von einer relativen Drehlage oder Ausrichtung der Referenzflächen 53, 63 zur Außenverzahnung 51, 61, 71 einer Zykloidenscheibe 05, 06, 07 zweier oder mehrerer gegeneinander um die Zylinderachse 20 verdreht angeordneter Zykloidenscheiben 05, 06, 07 können die Referenzflächen 53, 63 der mindestens einen verbleibenden Zykloidenscheibe 06, 07, 05 der gegeneinander um die Zylinderachse 20 verdreht angeordneten Zykloidenscheiben 05, 06, 07 gegenüber deren Außenverzahnung 51, 61, 71 um einen Versatz d ihrer Winkellage um deren Drehachse 50, 60, 70 verdreht angeordnet sein, um trotz ungerader Anzahl N+Z bzw. N-Z von Zähnen 23 der Innenverzahnung 22 und gerader Anzahl N von Zähnen der Außenverzahnungen 51, 61, 71 der Zykloidenscheiben 05, 06, 07 zwei oder mehrere Zykloidenscheiben 05, 06, 07 auf gleichmäßig um die Eingangswelle 03 verdreht angeordneten Exzenterabschnitten 31 drehbar anordnen zu können. Deren Bewegungen werden bei deren Abwälzungen auf der Gehäuseinnenfläche 21 mittels nur eines diesen Zykloidenscheiben 05, 06, 07 zugeordneten Ausgangsorgans 08 in Rotationsbewegungen der Ausgangswelle 04 umgewandelt. Der in Fig. 1, Fig. 2, Fig. 3 und Fig. 4 besonders deutlich erkennbare Versatz d der gegenseitigen Verdrehung der dort dargestellten zwei Zykloidenscheiben 05, 06 ergibt sich durch den Quotienten der Differenz der Zähnezahl N+Z bzw. N-Z der Innenverzahnung 22 und der Zähnezahl N der Außenverzahnung 51, 61, 71 zur Anzahl der in verschiedenen Drehlagen verdreht angeordneten und einem Ausgangsorgan 08 zugeordneten Zykloidenscheiben 05, 06, 07. Der Versatz d gibt an, um welches Maß, bezogen auf die Zahnradteilung bzw. den Modul der Außenverzahnungen 51, 61, 71 der Zykloidenscheiben 05, 06, 07, die Referenzflächen 53, 63 einer ersten Zykloidenscheibe 05, 06, 07 in Bezug auf eine zweite Zykloidenscheibe 06, 07, 05 bzw. in Bezug auf die Außenverzahnung 61, 71, 51 einer zweiten Zykloidenscheibe 06, 07, 05 bei deckungsgleicher Anordnung der Außenverzahnungen 51, 61, 71 der Zykloidenscheiben 05, 06, 07 verdreht angeordnet sind.

Liegen zwei Zykloidenscheiben 05, 06 eines mit zwei gegeneinander um 180° verdreht angeordneten Zykloidenscheiben 05, 06 ausgestatteten Zykloidgetriebes 01 bei gleicher Ausrichtung deren Referenzflächen 53, 63 unmittelbar übereinander und sind deren Drehachsen 50, 60 identisch, ist ausgehend von einer ersten Zykloidenscheibe 05 die Außenverzahnung der verbleibenden zweiten Zykloidenscheibe 06 um den Versatz d verdreht gegenüber der ersten Zykloidenscheibe 05 angeordnet (Fig. 1 bis Fig. 7 und Fig. 9).

Liegen drei oder n Zykloidenscheiben 05, 06, 07 eines mit drei oder n gegeneinander um 120° oder entsprechend 360°/n verdreht angeordneten Zykloidenscheiben 05, 06, 07 ausgestatteten Zykloidgetriebes 01 bei gleicher Ausrichtung deren Referenzflächen 53, 63 unmittelbar übereinander und sind deren Drehachsen 50, 60, 70 identisch, sind die Außenverzahnungen 51, 61, 71 der Zykloidenscheiben 05, 06, 07 jeweils gegenseitig um den Versatz d verdreht angeordnet (Fig. 8).

Alternativ zu einem Versatz d der gegenseitigen Verdrehung der Relativlage von Außenverzahnung 51, 61, 71 zu Referenzflächen 53, 63 können, wie in Fig. 7 dargestellt, den einzelnen Zykloidenscheiben 05, 06 zugeordnete ringförmige Partien 25, 26 der Innenverzahnung 22 vorgesehen sein. Je eine ringförmige Partie 25, 26 der Innenverzahnung 22 ist einer Zykloidenscheibe 05, 06 zugeordnet. Das Zykloidgetriebe 01 umfasst eine der Anzahl von Zykloidenscheiben 05, 06 entsprechende Anzahl von ringförmigen Partien 25, 26 der Innenverzahnung 22. Die Verzahnungen der gegeneinander um die Zylinderachse 20 verdreht angeordneten Zykloidenscheiben 05, 06 zugeordneten ringförmigen Partien 25, 26 der Innenverzahnung 22 sind gegeneinander um einen Versatz d ihrer Winkellage um die Zylinderachse 20 verdreht angeordnet. Dieser Versatz d der gegenseitigen Verdrehung ergibt sich durch den Quotienten der Differenz der Zähnezahl N+Z bzw. N-Z der Innenverzahnung 22 und der Zähnezahl N der Außenverzahnungen 51, 61 zur Anzahl der in verschiedenen Drehlagen verdreht angeordneten und einem Ausgangsorgan 08 zugeordneten Zykloidenscheiben 05, 06. Auch hierdurch können trotz ungerader Anzahl von Zähnen 23 der Innenverzahnung 22 und gerader Anzahl von Zähnen der Außenverzahnungen 51, 61 der Zykloidenscheiben 05, 06 zwei oder mehrere Zykloidenscheiben 05, 06 auf gleichmäßig um die Eingangswelle 03 verdreht angeordneten Exzenterabschnitten 31 drehbar angeordnet werden, deren Bewegungen bei deren Abwälzungen auf der Gehäuseinnenfläche 21 mittels nur eines diesen Zykloidenscheiben 05, 06 zugeordneten Ausgangsorgans 08 in Rotationsbewegungen der Ausgangswelle 04 umgewandelt werden. Der Versatz d gibt hierbei an, um welches Maß, bezogen auf die Zahnradteilung bzw. den Modul der Innenverzahnung 22, die eine ringförmige Partie 25 der Innenverzahnung 22 gegenüber der anderen ringförmigen Partie 25 der Innenverzahnung 22 in Bezug auf die Zylinderachse 20 verdreht angeordnet ist.

Hierdurch können die Zykloidenscheiben 05, 06 identisch hergestellt werden, wobei die Referenzflächen 53, 63 beider Zykloidenscheiben 05, 06 in derselben Drehlage in Bezug auf deren Außenverzahnungen 51, 61 angeordnet sind.

Sind zwei gegeneinander um 180° verdreht angeordnete Zykloidenscheiben 05, 06 vorgesehen, so sind zwei ringförmige Partien 25, 26 der Innenverzahnung 22 vorgesehen, deren Verzahnungen gegeneinander um den Versatz d, beispielsweise einen Versatz d von einem halben Zahn bei einer Differenz der Zähnezahl der Innenverzahnung 22 des Gehäuses 02 zu den Außenverzahnungen 51, 61 der Zykloidenscheiben 05, 06, um die Zylinderachse 20 verdreht an der Gehäuseinnenwand 21 angeordnet sind.

Sind drei oder mehr verdreht angeordnete Zykloidenscheiben 05, 06, 07 vorgesehen, so sind entsprechend drei oder mehr ringförmige Partien 25, 26 der Innenverzahnung 22 vorgesehen, deren Verzahnungen gleichmäßig gegeneinander um den Versatz d um die Zylinderachse 20 verdreht an der Gehäuseinnenwand 21 angeordnet sind.

Eine zusätzliche Variante, um trotz gerader Anzahl von Zähnen 23 der Außenverzahnungen 51, 61, 71 der Zykloidenscheiben 05, 06, 07 zwei oder mehr Zykloidenscheiben 05, 06, 07 auf gleichmäßig um die Eingangswelle verdreht angeordneten Exzenterabschnitten drehbar anordnen zu können, deren Bewegungen bei deren Abwälzungen auf der Gehäuseinnenfläche 21 mittels nur eines diesen Zykloidenscheiben 05, 06, 07 zugeordneten Ausgangsorgans 08 in Rotationsbewegungen der Ausgangswelle 04 umgewandelt werden, ergibt sich dadurch, dass die Innenverzahnung 22 des Gehäuses 02 eine um eine gerade Zahl Z höhere Zähnezahl aufweist als jeweils die Außenverzahnungen 51, 61, 71 der Zykloidenscheiben 05, 06, 07.

Das Ausgangsorgan 08 kann aus zwei mittels Distanzkörpern 80 miteinander verbundenen Drehkörpern 81, 82 gebildet sein. Die Zykloidenscheiben 05, 06, 07 des Zykloidgetriebes 01 sind dabei zwischen den Drehkörpern 81, 82 des Ausgangsorgans 08 angeordnet. Die Distanzkörper 80 können sich durch außermittige Durchgangsöffnungen 55, 65 in den Zykloidenscheiben 05, 06, 07 hindurch erstrecken. Die Distanzkörper 80 können separate, mittels Verbindungselementen, wie etwa Schrauben 83 und/oder Bolzen, mit den Drehkörpern 81, 82 verbundene Bauelemente sein. Alternativ können die Distanzkörper 80 mit einem der Drehkörper 81, 82 einstückig hergestellt sein.

Wahlweise kann mindestens ein Distanzkörper 80 einstückig mit einem ersten Drehkörper 81 und mindestens ein verbleibender Distanzkörper 80 einstückig mit einem verbleibenden zweiten Drehkörper 82 verbunden sein. Denkbar ist auch, dass die Distanzkörper 80, wie in Fig. 9.1 und Fig. 9.5 dargestellt, zweigeteilt sind. Dabei ist je ein Distanzkörperstumpf 84, 85 von zwei jeweils einen Distanzkörper 80 bildenden Distanzkörperstümpfen 84, 85 an einem Drehkörper 81, 82 angeordnet oder einstückig mit einem solchen verbunden und/oder hergestellt.

Das mindestens eine Ausgangsorgan 08 kann mit der Ausgangswelle 04 verbunden sein, diese umfassen oder von dieser umfasst werden.

Auf jedem Exzenterabschnitt 31 der Eingangswelle 03 ist dieselbe Anzahl von Zykloidenscheiben 05, 06, 07 drehbar angeordnet, wobei bevorzugt auf jedem Exzenterabschnitt 31 eine Zykloidenscheibe 05, 06, 07 drehbar angeordnet ist.

Zwischen dem Ausgangsorgan 08 und je einer Zykloidenscheibe 05, 06, 07 kann jeweils ein Transformationsorgan 09 vorgesehen sein. Das Ausgangsorgan 08 verfügt hierbei ebenfalls wie die Zykloidenscheiben 05, 06, 07 über eine oder mehrere, zur Drehmomentübertragung von einer oder mehreren Zykloidenscheiben 05, 06, 07 auf das Ausgangsorgan vorgesehene Referenzflächen 86.

Beim Abwälzen der Zykloidenscheiben 05, 06, 07 in dem Gehäuse 02 mit Innenverzahnung 22 führen die Zykloidenscheiben 05, 06, 07 in Bezug auf die Zylinderachse 20 des Gehäuses 02 Querbewegungen in allen Richtungen normal zur Zylinderachse 20 und damit auch normal zur Längsachse 40 der Ausgangswelle 04 aus, entsprechend zwei Freiheitsgraden normal zur Zylinderachse 20. Bei der Umwandlung der auch als Planetenbewegungen bezeichenbaren Bewegungen der Zykloidenscheiben 05, 06, 07 während deren Abwälzung in Rotationsbewegungen der Ausgangswelle 04 müssen diese allseitigen Querbewegungen der Zykloidenscheiben 05, 06, 07 in Bezug auf die Zylinderachse 20 des Gehäuses 02 mit der Innenverzahnung 22 ausführbar bleiben. Bei einer gewöhnlichen unmittelbaren Umwandlung der Bewegungen von Zykloidenscheiben 05, 06, 07 in Rotationsbewegungen der Ausgangswelle 04 mittels außermittig angeordneter, parallel zur Zylinderachse am Ausgangsorgan 09 oder an den Zykloidenscheiben 05, 06, 07 aufstehender Zapfen und korrespondierender Ausnehmungen oder Öffnungen am entsprechenden Gegenstück, i. e. an den Zykloidenscheiben oder am Ausgangsorgan, welche korrespondierende Ausnehmungen oder Öffnungen eine Bewegung der Zapfen entsprechend der Exzentrizität 32 der Exzenterabschnitte 31 zulässt, steht zur Drehmomentübertragung ausschließlich ein Punkt- bzw. Linienkontakt zwischen Zykloidenscheiben 05, 06, 07 und Ausgangsorgan 09 zu Verfügung._Dies schränkt die Leistungsfähigkeit eines Zykloidgetriebes 01, welches insbesondere hohe Leistungen auf kleinstmöglichem Raum zu vereinen sucht, stark ein.

Ein zwischen einem Ausgangsorgan 08 und einer Zykloidenscheibe 05, 06, 07 vorgesehenes Transformationsorgan 09 behebt diese Einschränkung, da es eine Zwischenstufe für die beiden notwendigen translatorischen Freiheitsgrade normal zur Zylinderachse 20 bildet. Das Transformationsorgan 09 ist hierzu mit einer Zykloidenscheibe derart beweglich verbunden, dass eine Zykloidenscheibe 05, 06, 07 gegenüber dem Transformationsorgan 09 Relativbewegungen in einer ersten Richtung normal zur Zylinderachse 20 ausführen kann, wohingegen Relativbewegungen in einer zweiten Richtung, welche senkrecht zur ersten Richtung verläuft, unterbunden werden. Darüber hinaus ist das Transformationsorgan 09 mit dem Ausgangsorgan 08 derart beweglich verbunden, dass das Transformationsorgan 09 gegenüber dem Ausgangsorgan 08 Relativbewegungen in der zweiten Richtung normal zur Zylinderachse 20 ausführen kann, wohingegen Relativbewegungen in der ersten Richtung, welche senkrecht zur zweiten Richtung verläuft, unterbunden sind.

Hierdurch ermöglicht eine mittelbare Umwandlung der Bewegungen von Zykloidenscheiben 05, 06, 07 in Rotationsbewegungen der Ausgangswelle 04 mittels eines zwischen je einer Zykloidenscheibe 05, 06, 07 und dem Ausgangsorgan 08 angeordneten Transformationsorgan 09 einen Linien- oder Flächenkontakt zur Drehmomentübertragung zwischen ihm und einer Zykloidenscheibe 05, 06, 07 und zwischen ihm und dem Ausgangsorgan 08. Über diesen Linien- oder Flächenkontakt können wesentlich höhere Drehmomente übertragen werden als über einen Punkt- bzw. Linienkontakt bei der weiter zuvor beschriebenen unmittelbaren Umwandlung der Bewegungen von Zykloiden-scheiben 05, 06, 07 in Rotationsbewegungen der Ausgangswelle 04 direkt mittels des Ausgangsorgans 08.

Die Verwendung eines Transformationsorgans 09 erlaubt es dadurch, zur Drehmomentübertragung von den Zykloidenscheiben 05, 06, 07 auf das Ausgangsorgan 08 an den Zykloidenscheiben 05, 06, 07 vorgesehene parallel zur Drehachse 50, 60, 70 der Zykloidenscheiben 05, 06, 07 verlaufende Referenzflächen 53, 63 eben auszuführen, wobei diese Referenzflächen 53, 63 innerhalb der durch sie aufgespannten Ebene Relativbewegungen quer zur Drehachse 50, 60, 70 der jeweiligen Zykloidenscheibe 05, 06, 07 zulassen.

Um einen entsprechenden ersten Freiheitsgrad zwischen der entsprechenden Zykloidenscheibe 05, 06, 07 und dem Ausgangsorgan 08 normal zur Zylinderachse 20 bzw. normal zur Drehachse 50, 60, 70 der jeweiligen Zykloidenscheibe 05, 06, 07 sicherzustellen, verfügt jedes Transformationsorgan 09 über mit den Referenzflächen 53, 63 der jeweiligen Zykloidenscheibe 05, 06, 07 korrespondierende Referenzflächen 93. Dieser erste Freiheitsgrad erlaubt hin- und hergehende Bewegungen der jeweiligen Zykloidenscheibe 05, 06, 07 relativ zum Transformationsorgan 09 in einer ersten Richtung normal zur Zylinderachse 20 bzw. normal zur Drehachse 50, 60, 70 der entsprechenden Zykloidenscheibe 05, 06, 07.

Um einen entsprechenden zweiten Freiheitsgrad zwischen der entsprechenden Zykloidenscheibe 05, 06, 07 und dem Ausgangsorgan 08 normal zur Zylinderachse 20 bzw. normal zur Drehachse 50, 60, 70 der jeweiligen Zykloidenscheibe 05, 06, 07 sicherzustellen, verfügt jedes Transformationsorgan 09 über mit den Referenzflächen 86 des Ausgangsorgans 08 korrespondierende Referenzflächen 96.

Dieser zweite Freiheitsgrad erlaubt hin- und hergehende Bewegungen des Transformationsorgans 09 relativ zum Ausgangsorgan 08 in einer zweiten Richtung normal zur Zylinderachse 20 bzw. normal zur Drehachse 50, 60, 70 der entsprechenden Zykloidenscheibe 05, 06, 07. Diese zweite Richtung verläuft darüber hinaus normal zur ersten Richtung, in welcher die jeweilige Zykloidenscheibe 05, 06, 07 Relativbewegungen gegenüber dem Transformationsorgan 09 ausführen kann.

Hierdurch ergeben sich korrespondierende Paare von Referenzflächen 53, 93 bzw. 63, 93 zwischen jeder Zykloidenscheibe 05, 06, 07 und dem dieser zugeordneten Transformationsorgan 09 sowie korrespondierende Paare von Referenzflächen 96, 86 zwischen den Transformationsorganen 09 und dem Ausgangsorgan 08. Die Paare von Referenzflächen 53, 93 bzw. 63, 93 und 96, 86 erlauben Translationsrelativbewegungen in Richtungen normal zur Zylinderachse 20 zwischen Zykloidenscheibe 05, 06, 07 und Ausgangsorgan 08 und verhindern Rotationsrelativbewegungen um die Zylinderachse 20 zwischen Zykloidenscheibe 05, 06, 07 und Ausgangsorgan 08. Die Transformationsorgane 09 führen dabei Zwischenbewegungen aus, bei denen es sich bezogen auf das jeweilige Transformationsorgan 09 um erste hin- und hergehende Zwischenbewegungen entlang einer ersten Richtung relativ zum Ausgangsorgan 08 sowie um zweite hin- und hergehende Zwischenbewegungen entlang einer zur ersten Richtung orthogonalen zweiten Richtung relativ zur jeweiligen Zykloidenscheibe 05, 06, 07 handelt. Die beiden senkrecht aufeinander stehenden ersten und zweiten Richtungen liegen in einer normal zur Zylinderachse 20 verlaufenden Ebene.

Auch bei einer Ausführung mit Transformationsorganen 09 kann das Ausgangsorgan 08 aus zwei mittels Distanzkörpern 80 miteinander verbundenen Drehkörpern 81, 82 gebildet sein. Die Distanzkörper 80 können sich durch außermittige Durchgangsöffnungen 55, 65 in den Zykloidenscheiben 05, 06, 07 sowie ebenfalls durch außermittige Durchgangsöffnungen oder entsprechende Aussparungen 95 in den Transformationsorganen 09 hindurch erstrecken, so dass die Zykloidenscheiben 05, 06, 07 des Zykloidgetriebes 01 zwischen den Transformationsorganen 09 und diese wiederum zwischen den Drehkörpern 81, 82 des Ausgangsorgans 08 angeordnet sind.

Bei den Referenzflächen 53, 63, 93, 86, 96 in und/oder an den Zykloidenscheiben 05, 06, 07 und/oder in und/oder an dem Ausgangsorgan 08 und/oder in und/oder an dem Transformationsorgan 09 kann es sich um miteinander korrespondierende:
- normal zur Zylinderachse 20 radial verlaufende Führungsbahnen und/oder
- Vorsprünge und/oder
- Nuten und/oder
- außermittig angeordnete sich parallel zur Zylinderachse 20 erstreckende Stifte und/oder
- außermittig angeordnete sich parallel zur Zylinderachse 20 erstreckende Bolzen und/oder
- sich parallel zur Zylinderachse 20 erstreckende außermittige Durchgangsöffnungen
sowie Kombinationen hieraus handeln.

Zwischen zusammenwirkenden Referenzflächen 53, 93, 63, 93, 86, 96 unterschiedlicher Elemente des Zykloidgetriebes 01, wie etwa zwischen den zusammenwirkenden Referenzflächen 53, 93, 63, 93 von Zykloidenscheiben 05, 06, 07 und Transformationsorganen 09 und/oder zwischen den zusammenwirkenden Referenzflächen 96, 86 von Transformationsorganen 09 und Ausgangsorgan 08, sind bevorzugt Wälzlager und/oder Wälzelemente 10 angeordnet, wie beispielsweise Wälzkörper. Hierdurch werden Reibungsverluste verringert, und der Wirkungsgrad des Zykloidgetriebes 01 wird erhöht.

Wichtig ist hervorzuheben, dass der wesentliche Vorteil der Verzahnung mit gerader Übersetzung darin besteht, dass bei den Berechnungen mit einer geraden Zahl gearbeitet werden kann, was beispielsweise die Antriebssteuerung des Getriebes, die Zahnraddrehung und dergleichen vereinfacht oder präzisiert.

Für den Prozess einer digitalisierten Steuerung von Servoantrieben, die das Getriebe antreiben, oder einer Steuerung von Aktuatoren, Modulen oder anderer Einheiten mit integriertem Getriebe entsprechen die optimalen geraden Übersetzungen einer Potenz von zwei.

In den Fig. 1, Fig. 2, Fig. 3 und Fig. 4 sind Ausführungen von Verzahnungen der genannten Art von Getrieben mit einem geraden Übersetzungsverhältnis und einem auch als Räderpaar bezeichneten Paar Zykloidenscheiben 05, 06 mit Außenverzahnung 51, 61 mit einer geraden Anzahl von Zähnen 23 dargestellt. Die Zykloidenscheiben 05, 06 sind dabei derart positioniert, dass diese um 180° einander gegenseitig gedreht sind und gleichzeitig um eine Exzentrizität 32 gegenüber der in Fig. 1 bis Fig. 4 horizontal verlaufenden, mit der Zylinderachse 20 zusammenfallenden Getriebeachse bzw. Horizontalachse der Innenverzahnung 22 des Gehäuses 02 des Getriebes mit einer ungeraden Anzahl von Zähnen versetzt sind. In den angeführten Beispielen ist die Außenverzahnung 61 auf der zweiten Zykloidenscheibe 06 derart hergestellt, dass sie um einen halben Abstand (d. h. um einen Winkel, einen Anteil von 180/gerade Übersetzung bzw. gerade Anzahl von Zähnen der Außenverzahnungen 51, 61 der Zykloidenscheiben 05, 06) gegenüber der Außenverzahnung 51 auf der ersten Zykloidenscheibe 05 gedreht ist.

Fig. 1 zeigt ein Ausführungsbeispiel der Verzahnung, bestehend aus einer Innenverzahnung 22 mit Wälz- oder Rollenelementen 24 mit in einer ungeraden Anzahl von Zähnen 23 im Gehäuse 02 und mit einem Paar Zykloidenscheiben 05, 06 mit Außenverzahnung 51, 61, wobei auf der zweiten Zykloidenscheibe 06 die Außenverzahnung 61 derart hergestellt ist, dass sie um einen Winkel 180°/Wert der geraden Übersetzung gegenüber der Außenverzahnung 51 der verbleibenden ersten Zykloidenscheibe 05 gedreht ist. Einige Zähne 23 mit Wälz- oder Rollenelementen 24 im Gehäuse 02 können auch weggelassen werden, oder entsprechende zusammen mit Wälz- oder Rollenelementen 24 Zähne 23 bildende Nuten müssen nicht mit Wälz- oder Rollenelementen 24 gefüllt sein. Einige Zähne der Außenverzahnungen 51, 61 der Zykloidenscheiben 05, 06 können weggelassen werden.

Fig. 2 zeigt ein Ausführungsbeispiel der Verzahnung, bestehend aus einer Innenverzahnung 22 im Gehäuse 02 mit in einer ungeraden Anzahl von Zähnen 23 und mit einem Paar Zykloidenscheiben 05, 06 mit Außenverzahnung 51, 61. Dabei ist auf der zweiten Zykloidenscheibe 06 die Außenverzahnung 61 derart hergestellt, dass sie um einen Winkel 180°/Wert der geraden Übersetzung gegenüber der Außenverzahnung 51 der verbleibenden ersten Zykloidenscheibe 05 gedreht ist. Einige Zähne 23 im Gehäuse 02 können weggelassen werden.

Fig. 3 zeigt ein Ausführungsbeispiel der Verzahnung, bestehend aus einer Innenverzahnung 22 im Gehäuse 02 mit in einer ungeraden Anzahl von Zähnen 23 und mit einem Paar Zykloidenscheiben 05, 06 mit Außenverzahnung 51, 61 mit Wälz- oder Rollenelementen 54, 64 in einer geraden Zahl von Nuten an den Zykloidenscheiben 05, 06 als deren Außenverzahnungen 51, 61. Dabei ist auf der zweiten Zykloidenscheibe 06 die Außenverzahnung 61 derart hergestellt, dass sie um einen Winkel 180°/Wert der geraden Übersetzung gegenüber der Außenverzahnung 51 der verbleibenden ersten Zykloidenscheibe 05 gedreht ist. Einige Nuten mit Wälz- oder Rollenelementen 54, 64 in den Zykloidenscheiben 05, 06 können auch weggelassen werden oder nicht mit Wälz- oder Rollenelementen 54, 64 gefüllt sein. Einige Zähne 23 im Gehäuse 02 können weggelassen werden.

Fig. 4 zeigt ein Ausführungsbeispiel der Verzahnung, bestehend aus einer Innenverzahnung 22 mit Wälz- oder Rollenelementen 54, 64 mit in einer ungeraden Anzahl von Nuten im Gehäuse 02 und mit einem Paar Zykloidenscheiben 05, 06 mit Außenverzahnung 51, 61 mit Wälz- oder Rollenelementen 54, 64 in einer geraden Zahl von Nuten an den Zykloidenscheiben 05, 06 als deren Außenverzahnungen 51, 61. Auf der zweiten Zykloidenscheibe 06 ist die Außenverzahnung 61 derart hergestellt, dass sie um einen Winkel 180°/Wert der geraden Übersetzung gegenüber der Außenverzahnung 51 der verbleibenden ersten Zykloidenscheibe 05 gedreht ist. Einige Nuten mit Wälz- oder Rollenelementen 24 im Gehäuse 02 können auch weggelassen werden oder nicht mit Wälz- oder Rollenelementen 24 gefüllt sein.

Fig. 5 zeigt in Fig. 5.1, Fig. 5.2 und Fig. 5.3 ein Beispiel der Anordnung der Verzahnung aus dem Ausführungsbeispiel aus Fig.1. Dabei zeigt Fig. 5.1 eine Schnittansicht A-A der Fig. 5.2 und der Fig. 5.3. Fig. 5.2 zeigt dabei einen Querschnitt, der eine Ansicht des Eingriffs der Zykloidenscheibe 05 in die Innenverzahnung 22 am Gehäuse 02 gewährt. Fig. 5.3 zeigt hingegen einen Querschnitt, der im selben Zustand des Zykloidgetriebes 01 eine Ansicht des Eingriffs der Zykloidenscheibe 06 in die Innenverzahnung 22 am Gehäuse 02 gewährt.

Fig. 6 zeigt in Fig. 6.1, Fig. 6.2 und Fig. 6.3 ein Beispiel der Anordnung der Verzahnung aus dem Ausführungsbeispiel aus Fig.1. In dem Gehäuse 02 sind zwei Reihen von Wälz- oder Rollenelementen 24 angeordnet. Einige Nuten an der Gehäuseinnenwand 21 müssen nicht mit Wälz- oder Rollenelementen 24 hergestellt oder gefüllt sein. Alternativ können einige Nuten an der Gehäuseinnenwand 21 mit einem oder zwei oder mehreren Wälz- oder Rollenelementen 24 kombiniert gefüllt sein. Das Gehäuse 02 des Zykloidgetriebes 01 kann in zwei oder mehrere Teile aufgeteilt sein, mit Nuten, die nach dem Verbinden eine Einheit bilden. Dabei zeigt Fig. 6.1 eine Schnittansicht A-A der Fig. 6.2 und der Fig. 6.3. Fig. 6.2 zeigt dabei einen Querschnitt, der eine Ansicht des Eingriffs der Zykloidenscheibe 05 in die Innenverzahnung 22 am Gehäuse 02 gewährt. Fig. 6.3 zeigt hingegen einen Querschnitt, der im selben Zustand des Zykloidgetriebes 01 eine Ansicht des Eingriffs der Zykloidenscheibe 06 in die Innenverzahnung 22 am Gehäuse 02 gewährt.

Fig. 7 zeigt in Fig. 7.1, Fig. 7.2 und Fig. 7.3 eine Verzahnung mit gerader Übersetzung. Das Gehäuse 02 des Zykloidgetriebes 01 bildet eine Einheit, bestehend aus mindestens zwei Partien 25, 26 der Innenverzahnung 22 mit Nuten mit Wälz- oder Rollenelementen 24. Die zweite Partie 26 ist dabei gegenüber der ersten Partie 25 um einen Winkel 180°/ungerade Anzahl von Zähnen 23 des Gehäuses 02 gedreht angeordnet. Die Verzahnung beider Zykloidenscheiben 05, 06 ist dabei identisch. Dabei zeigt Fig. 7.1 eine Schnittansicht A-A der Fig. 7.2 und der Fig. 7.3. Fig. 7.2 zeigt dabei einen Querschnitt, der eine Ansicht des Eingriffs der Zykloidenscheibe 05 in die Partie 25 der Innenverzahnung 22 am Gehäuse 02 gewährt. Fig. 7.3 zeigt hingegen einen Querschnitt, der im selben Zustand des Zykloidgetriebes 01 eine Ansicht des Eingriffs der Zykloidenscheibe 06 in die gegenüber der Partie 25 um einen Winkel 180°/ungerade Anzahl von Zähnen 23 des Gehäuses 02 gedrehte Partie 26 Innenverzahnung 22 am Gehäuse 02 gewährt. Die angeführte Lösung mit der Aufteilung der Innenverzahnung 22 des Gehäuses 02 in mehrere Partien 25, 26 kann mit Verzahnungen verwirklicht sein, wie sie auch bei den zuvor beschriebenen Ausführungen gemäß Fig. 1, Fig. 2, Fig. 3, Fig. 4 verwirklicht sind, wobei aber die zweite Partie der Innenverzahnung 22 des Gehäuses 02 um einen Winkel 180°/ungerade Anzahl von Zähnen 23 oder Nuten im Gehäuse 02 gedreht ist und die Zykloidenscheiben 05, 06 eine identische Verzahnung aufweisen. Einige Nuten am Gehäuse 02 müssen nicht mit Wälz- oder Rollenelementen 24 hergestellt oder gefüllt sein. Die Partien 25, 26 können durch zusammengefügte Teile des Gehäuses 02 gebildet sein.

In Fig. 8 ist eine Verzahnungslösung dargestellt mit einer Differenz der Zähnezahl der Innenverzahnung 22 zur Zähnezahl der Außenverzahnungen 51, 61, 71 der Zykloidenscheiben 05, 06, 07 von eins. Auch das in Fig. 8 dargestellte Zykloidgetriebe 01 weist ein gerades Übersetzungsverhältnis auf. Das in Fig. 8 dargestellte Zykloidgetriebe 01 weist drei Zykloidenscheiben 05, 06, 07 mit einer geraden Zähnezahl deren Außenverzahnungen 51, 61, 71 auf sowie eine Innenverzahnung 22 an der Gehäuseinnenwand 21 des Gehäuses 02 mit einer ungeraden Anzahl von Zähnen 23 bzw. Nuten mit Wälz- oder Rollenelementen 24. Die Zykloidenscheiben 05, 06, 07 weisen alle identische Außenverzahnungen 51, 61, 71 auf. Die Zykloidenscheiben 05, 06, 07 werden derart angebracht, dass sie zueinander um 120° gedreht und um eine Exzentrizität 32 versetzt sind. Fig. 8.1, Fig. 8.3 und Fig. 8.4 zeigen hierbei eine Ansicht der Verzahnung im Schnitt A-A mit einer unterschiedlichen Anzahl von Wälz- oder Rollenelementen 24 in an der Gehäuseinnenwand 21 des Gehäuses 02 vorgesehenen Nuten des Zykloidgetriebes 01.

Die Verzahnungen können dabei wiederum wie in den Fig. 1 bis Fig. 4 und/oder Fig. 10 dargestellt ausgeführt sein.

Wichtig ist in diesem Zusammenhang unter Bezugnahme auf Fig. 10 nochmals zu erwähnen, dass:
- die Zykloidenscheiben 05, 06, 07 als ein Zahnrad oder als eine Kurvenscheibe ausgeführt sein können und/oder
- der Kontakt zwischen dem Gehäuse 02 und den Zykloidenscheiben 05, 06, 07 mittels fester Zähne 23 und/oder durch Rollen- 24 und/oder Kugellagerelemente gebildete drehbare Zähne hergestellt sein kann.

Demnach kann die Innenverzahnung 22 am Gehäuse 02 mit festen Zähnen 23 oder mit beispielsweise als Rollenelemente 24 ausgeführten drehbaren Zähnen ausgeführt sein, und/oder es können die Außenverzahnungen 51, 61, 71 der Zykloidenscheiben 05, 06, 07 mit festen Zähnen 23 oder mit beispielsweise als Rollenelemente 24 ausgeführten drehbaren Zähnen ausgeführt sein.

Die Rollenelemente 24 können hierbei drehbar gelagert sein, indem sie sich an Lagerbuchsen 27 abstützen, wie dies von Gleitlagerungen bekannt ist (Fig. 10.1), oder auf Lagerbolzen 28 gelagert sein, wie dies von Gleitlagern bekannt ist (Fig. 10.2), oder als an Lagerbolzen 28 gelagerte Kugellager 29 ausgebildet oder mittels Kugellagern 29 drehbar an Lagerbolzen 28 gelagert sein (Fig. 10.3).

Einige Nuten an dem Gehäuse 02 oder an den Zykloidenscheiben 05, 06, 07 müssen nicht mit Wälz- oder Rollenelementen 24 hergestellt oder gefüllt sein oder können mit einem oder zwei oder mehreren Wälz- oder Rollenelementen 24 kombiniert gefüllt sein.

Ebenfalls wichtig ist, an dieser Stelle nochmals zu erwähnen, dass die Innenverzahnung 22 ausgehend von einer im Sinne des Übersetzungs-verhältnisses i vorgesehene und/oder notwendige Soll-Zähnezahl eine niedrigere Ist-Zähnezahl aufweisen kann, wobei die Zähne 23 bei der Ist-Zähnezahl identisch ausgeführt und positioniert sind, wie bei der Soll-Zähnezahl. Hierdurch liegen bei der Ist-Zähnezahl im Unterschied zur Soll-Zähnezahl zwischen benachbarten Zähnen 23 eine oder mehrere Zahnlücken, in denen ein oder mehrere identische Zähne 23 der Innenverzahnung 22 Platz finden können.

Das Übersetzungsverhältnis i bleibt hierbei für die Ist-Zähnezahl im Verbleich zur Soll-Zähnezahl unverändert, da dieses durch die Zähnezahl N der Außenverzahnungen 51, 61, 71 der Zykloidenscheiben 05, 06, 07 bedingt ist.

Es können sogar Zähne 23 bei den Außenverzahnungen 51, 61, 71 der Zykloidenscheiben 05, 06, 07 weggelassen werden, beispielsweise jeder zweite Zahn 23, wobei deren Form und Winkel jeweils bezogen auf die eigene zentrale Drehachse 50, 60, 70 der jeweiligen Zykloidenscheibe 05, 06, 07 wie bei N Zähnen 23 bleibt. Hierdurch arbeiten die Zykloidenscheiben 05, 06, 07 weiterhin so, als ob eine Anzahl von N Zähnen 23 vorhanden wäre.

Das Zykloidgetriebe 01 kann zur Verwendung in Verbindung mit einem Stellantrieb vorgesehen sein.

Die Erfindung ist insbesondere im Bereich der Herstellung von Getrieben sowie von Stellantrieben gewerblich anwendbar.

### Bezugszeichenliste

- 01: Zykloidgetriebe
- 02: Gehäuse
- 03: Eingangswelle
- 04: Ausgangswelle
- 05: Zykloidenscheibe
- 06: Zykloidenscheibe
- 07: Zykloidenscheibe
- 08: Ausgangsorgan
- 09: Transformationsorgan
- 10: Wälzelement
- 20: Zylinderachse
- 21: Gehäuseinnenwand
- 22: Innenverzahnung
- 23: Zahn
- 24: Rollenelement
- 25: Partie der Innenverzahnung (der Zykloidenscheibe 05 zugeordnet)
- 26: Partie der Innenverzahnung (der Zykloidenscheibe 06 zugeordnet)
- 27: Lagerbuchse
- 28: Lagerbolzen
- 29: Kugellager
- 30: Längsachse der Eingangswelle 03
- 31: Exzenterabschnitt
- 32: Exzentrizität
- 40: Längsachse der Ausgangswelle 04
- 50: Drehachse der Zykloidenscheibe 05
- 51: Außenverzahnung der Zykloidenscheibe 05
- 52: Stirnseite der Zykloidenscheibe 05
- 53: Referenzfläche der Zykloidenscheibe 05
- 54: Rollenelement
- 55: außermittige Durchgangsöffnung in der Zykloidenscheibe 05
- 60: Drehachse der Zykloidenscheibe 06
- 61: Außenverzahnung der Zykloidenscheibe 06
- 62: Stirnseite der Zykloidenscheibe 06
- 63: Referenzfläche der Zykloidenscheibe 06
- 64: Rollenelement
- 65: außermittige Durchgangsöffnung in der Zykloidenscheibe 06
- 70: Drehachse der Zykloidenscheibe 07
- 71: Außenverzahnung der Zykloidenscheibe 07
- 80: Distanzkörper
- 81: Drehkörper
- 82: Drehkörper
- 83: Schraube
- 84: Distanzkörperstumpf
- 85: Distanzkörperstumpf
- 86: Referenzfläche des Ausgangsorgans 08
- 93: Referenzfläche des Transformationsorgans 09
- 95: Aussparung des Transformationsorgans 09
- 96: Referenzfläche des Transformationsorgans 09
- d: Versatz

## Patentansprüche

1. Zykloidgetriebe (01) umfassend:
- ein Gehäuse (02) mit einer konzentrisch um eine Zylinderachse (20) angeordneten, zylinderförmigen Gehäuseinnenwand (21), welche mit einer Innenverzahnung (22) versehen ist,
- eine um die Zylinderachse (20) drehbar gelagerte Eingangswelle (03) mit mindestens zwei gleichmäßig um die Längsachse (30) der Eingangswelle (03) verdreht angeordneten Exzenterabschnitten (31) gleicher Exzentrizität (32),
- eine um die Zylinderachse (20) drehbar gelagerte Ausgangswelle (04), wobei die Längsachsen (30, 40) der Eingangswelle (03) und der Ausgangswelle (04) mit der Zylinderachse (20) übereinstimmen,
- mindestens zwei Zykloidenscheiben (05, 06, 07), von denen jede Zykloidenscheibe (05, 06, 07) um eine eigene, zentrale Drehachse (50, 60, 70) drehbar auf einem Exzenterabschnitt (31) angeordnet ist und über eine mit der Innenverzahnung (22) kämmende Außenverzahnung (51, 61, 71) verfügt, wobei die Drehachse (50, 60, 70) jeder Zykloidenscheibe (05, 06, 07) um die Exzentrizität (32) zur Zylinderachse (20) versetzt ist, wobei der Durchmesser der Zykloidenscheiben (05, 06, 07) so bemessen ist, dass deren Außenverzahnung (51, 61, 71) in einer Richtung mit der Innenverzahnung (22) in Eingriff kommt, in welche Richtung der Exzenterabschnitt (31), auf dem eine Zykloidenscheibe (05, 06, 07) angeordnet ist, momentan weist, wohingegen in der entgegengesetzten Richtung die Außenverzahnung (51, 61, 71) frei von einem Eingriff mit der Innenverzahnung (22) ist, und
- mindestens ein um die Zylinderachse (20) drehbar gelagertes Ausgangsorgan (08), welches die Bewegungen einer oder mehrerer Zykloidenscheiben (05, 06, 07) bei deren Abwälzung im Gehäuse (02) in eine Rotationsbewegung der Ausgangswelle (04) umwandelt,
- die Innenverzahnung (22) des Gehäuses (02) eine um eine ganze ungerade Zahl höhere Zähnezahl aufweist, als jeweils die Außenverzahnungen (51, 61, 71) der Zykloidenscheiben (05, 06, 07), und
**gekennzeichnet durch**
- ein gerades Übersetzungsverhältnis i, welches angibt, wie viele Umdrehungen der Eingangswelle (03) erforderlich sind, um eine volle Umdrehung der Ausgangswelle (04) zu erhalten, wobei die Außenverzahnungen (51, 61, 71) der Zykloidenscheiben (05, 06, 07) jeweils eine gerade Zähnezahl aufweisen und das Übersetzungsverhältnis i gerade ist, wenn i für i>1 oder wenn 1/i für i<1 eine in mathematischem Sinne gerade Zahl ist, und
- den einzelnen Zykloidenscheiben (05, 06, 07) zugeordnete, ringförmige Partien (25, 26) der Innenverzahnung (22), wobei je eine ringförmige Partie (25, 26) einer Zykloidenscheibe (05, 06, 07) zugeordnet ist und das Zykloidgetriebe (01) eine der Anzahl von Zykloidenscheiben (05, 06, 07) entsprechende Anzahl von Partien (25, 26) umfasst, wobei die Verzahnungen der gegeneinander um die Zylinderachse (20) verdreht angeordneten Zykloidenscheiben (05, 06, 07) zugeordneten Partien (25, 26) gegeneinander um einen Versatz (d) ihrer Winkellage um die Zylinderachse (20) verdreht angeordnet sind, welcher sich durch den Quotienten der Differenz der Zähnezahl der Innenverzahnung (22) und der Außenverzahnung (51, 61, 71) zur Anzahl der in verschiedenen Drehlagen verdreht angeordneten und einem Ausgangsorgan (08) zugeordneten Zykloidenscheiben (05, 06, 07) ergibt.

2. Zykloidgetriebe (01) nach Anspruch 1,
**dadurch gekennzeichnet,**
**dass** das gerade Übersetzungsverhältnis einer Potenz von zwei entspricht.

3. Zykloidgetriebe (01) nach Anspruch 1 oder 2,
**dadurch gekennzeichnet,**
**dass** die Zykloidenscheiben (05, 06, 07) jeweils Referenzflächen (53, 63) aufweisen, welche Referenzflächen zur Drehmomentübertragung von den Zykloidenscheiben (05, 06, 07) auf mindestens ein Ausgangsorgan (08) vorgesehen sind, wobei das mindestens eine Ausgangsorgan (08) mit einer oder mehreren Referenzflächen (53, 63) wenigstens einer Zykloidenscheibe (05, 06, 07) in derartiger Wirkverbindung steht, dass die Bewegungen einer oder mehrerer Zykloidenscheiben (05, 06, 07) bei deren Abwälzung im Gehäuse (02) in eine Rotationsbewegung der Ausgangswelle (04) umgewandelt werden, und wobei ausgehend von einer relativen Ausrichtung der Referenzflächen (53, 63) zur Außenverzahnung (51, 61, 71) einer Zykloidenscheibe (05, 06, 07) zweier oder mehrerer gegeneinander um die Zylinderachse (20) verdreht angeordneter Zykloidenscheiben (05, 06, 07), die Referenzflächen (53, 63) der mindestens einen verbleibenden Zykloidenscheibe (06, 07, 05) der gegeneinander um die Zylinderachse (20) verdreht angeordneten Zykloidenscheiben (05, 06, 07) gegenüber deren Außenverzahnung (51, 61, 71) um den Versatz (d) ihrer Winkellage um deren Drehachse (50, 60, 70) verdreht angeordnet sind.

4. Zykloidgetriebe (01) nach einem der vorhergehenden Ansprüche,
**dadurch gekennzeichnet,**
**dass** das Ausgangsorgan (08) aus zwei vermittels Distanzkörpern (80) miteinander verbundenen Drehkörpern (81, 82) gebildet ist, wobei die Zykloidenscheiben (05, 06, 07) des Zykloidgetriebes (01) zwischen den Drehkörpern (81, 82) des Ausgangsorgans (08) angeordnet sind.

5. Zykloidgetriebe (01) nach einem der vorhergehenden Ansprüche,
**dadurch gekennzeichnet,**
**dass** das mindestens eine Ausgangsorgan (08) mit der Ausgangswelle (04) verbunden ist, diese umfasst oder von dieser umfasst wird.

6. Zykloidgetriebe (01) nach einem der vorhergehenden Ansprüche,
**dadurch gekennzeichnet,**
**dass** auf jedem Exzenterabschnitt (31) der Eingangswelle (03) die selbe Anzahl von Zykloidenscheiben (05, 06, 07) drehbar angeordnet ist.

7. Zykloidgetriebe (01) nach einem der vorhergehenden Ansprüche,
**dadurch gekennzeichnet,**
**dass** die Zykloidenscheiben (05, 06, 07) als ein Zahnrad oder als eine Kurvenscheibe ausgeführt sind.

8. Zykloidgetriebe (01) nach einem der vorhergehenden Ansprüche,
**dadurch gekennzeichnet,**
**dass** der Kontakt zwischen dem Gehäuse (02) und einer Zykloidenscheibe (05, 06, 07) vermittels fester Zähne (23) hergestellt ist.

9. Zykloidgetriebe (01) nach einem der vorhergehenden Ansprüche,
**dadurch gekennzeichnet,**
**dass** der Kontakt zwischen dem Gehäuse (02) und einer Zykloidenscheibe (05, 06, 07) durch Rollen- (24) und/oder Kugellagerelemente gebildete, drehbare Zähne (23) hergestellt ist.

10. Zykloidgetriebe (01) nach einem der vorhergehenden Ansprüche,
**dadurch gekennzeichnet,**
**dass** die Innenverzahnung (22) ausgehend von einer Soll-Zähnezahl eine niedrigere Ist-Zähnezahl aufweist, wobei die Zähne (23) bei der Ist-Zähnezahl identisch ausgeführt und positioniert sind, wie bei der Soll-Zähnezahl, so dass bei der Ist-Zähnezahl im Unterschied zur Soll-Zähnezahl zwischen benachbarten Zähnen (23) eine oder mehrere Zahnlücken liegen, in denen ein oder mehrere identische Zähne (23) der Innenverzahnung (22) Platz finden können.

## Claims

1. Cycloidal gearbox (01) comprising:
- a housing (02) with a cylindrical housing inner wall (21) arranged concentrically around a cylinder axis (20), which is provided with an internal toothing (22),
- an input shaft (03) mounted rotatably about the cylinder axis (20) with at least two eccentric sections (31) of the same eccentricity (32) uniformly disclocatedly arranged about the longitudinal axis (30) of the input shaft (03),
- an output shaft (04) rotatably mounted about the cylinder axis (20), wherein the longitudinal axes (30, 40) of the input shaft (03) and the output shaft (04) coincide with the cylinder axis (20),
- at least two cycloidal discs (05, 06, 07), each cycloidal disc (05, 06, 07) being arranged rotatably about its own central axis of rotation (50, 60, 70) on an eccentric section (31) and having external teeth (51, 61, 71) meshing with the internal teeth (22), the axis of rotation (50, 60, 70) of each cycloidal disc (05, 06, 07) being offset by the eccentricity (32) relative to the cylinder axis (20), wherein the diameter of the cycloidal discs (05, 06, 07) is such that the external teeth (51, 61, 71) thereof engage with the internal teeth (22) in a direction in which the eccentric portion (31) on which a cycloidal disc (05, 06, 07) is disposed momentarily faces, whereas in the opposite direction the external teeth (51, 61, 71) are free of engagement with the internal teeth (22), and
- at least one output member (08) mounted rotatably about the cylinder axis (20), which converts the movements of one or more cycloidal discs (05, 06, 07) during their rolling in the housing (02) into a rotational movement of theoutput shaft (04),
- the internal teeth (22) of the housing (02) have a number of teeth which is a whole odd number higher than the respective external teeth (51, 61, 71) of the cycloidal discs (05, 06, 07), and
**characterised by**
- an even transmission ratio i indicating how many revolutions of the input shaft (03) are required to obtain one full revolution of the output shaft (04), the external teeth (51, 61, 71) of the cycloidal discs (05, 06, 07) each having an even number of teeth and the transmission ratio i being even if i for i>1 or if 1/i for i<1 is an even number in the mathematical sense, and
- annular portions (25, 26) of the internal toothing (22) associated with the individual cycloidal discs (05, 06, 07), wherein one annular portion (25, 26) is associated with each cycloidal disc (05, 06, 07) and the cycloidal transmission (01) comprises a number of portions (25, 26) corresponding to the number of cycloidal discs (05, 06, 07), wherein the toothings of the portions (25, 26) associated with the cycloidal discs (05, 06, 07) which are arranged rotated relative to one another about the cylinder axis (20) are arranged rotated relative to one another by an offset (d) of their angular position about the cylinder axis (20), which offset (d) is determined by the quotient of the difference of the teeth of the cycloidal discs (05, 06, 07), which is obtained by the quotient of the difference of the number of teeth of the internal toothing (22) and of the external toothing (51, 61, 71) to the number of cycloidal discs (05, 06, 07) arranged rotated in different rotational positions and associated with an output member (08).

2. Cycloidal gearbox (01) according to claim 1,
**characterised in that**
that the even transmission ratio corresponds to a power of two.

3. Cycloidal gearbox (01) according to claim 1 or 2,
**characterised in that**
the cycloidal discs (05, 06, 07) each have reference surfaces (53, 63), which reference surfaces are provided for transmitting torque from the cycloidal discs (05, 06, 07) to at least one output member (08), the at least one output member (08) being operatively connected to one or more reference surfaces (53, 63) of at least one cycloidal disc (05, 06, 07) in such an operative connection that the movements of one or more cycloidal discs (05, 06, 07) are converted into a rotational movement of the output shaft (04) when they roll in the housing (02), and wherein, starting from a relative alignment of the reference surfaces (53, 63) to the external toothing (51, 61, 71) of a cycloidal disc (05, 06, 07) of two or more cycloidal discs (05, 06, 07) arranged rotated relative to one another about the cylinder axis (20), the reference surfaces (53, 63) of the at least one remaining cycloidal disc (06, 07, 05) of the cycloidal discs (05, 06, 07) arranged rotated relative to one another about the cylinder axis (20) are arranged rotated relative to their external toothing (51, 61, 71) by the offset (d) of their angular position about their axis of rotation (50, 60, 70).

4. Cycloidal gearbox (01) according to one of the preceding claims,
**characterised in that**
the output member (08) is formed from two rotary members (81, 82) connected to one another by means of spacer members (80), the cycloidal discs (05, 06, 07) of the cycloidal drive (01) being arranged between the rotary members (81, 82) of the output member (08).

5. Cycloidal gearbox (01) according to one of the preceding claims,
**characterised in that**
the at least one output member (08) is connected to the output shaft (04), surrounds it or is surrounded by it.

6. Cycloidal transmission (01) according to any of the preceding claims,
**characterised in that**
the same number of cycloidal discs (05, 06, 07) is rotatably arranged on each eccentric section (31) of the input shaft (03).

7. Cycloidal transmission (01) according to any of the preceding claims,
**characterised in that**
the cycloidal discs (05, 06, 07) are designed as a toothed wheel or as a cam disc.

8. Cycloidal transmission (01) according to any one of the preceding claims,
**characterised in that**
the contact between the housing (02) and a cycloidal disc (05, 06, 07) is established by means of fixed teeth (23).

9. Cycloidal transmission (01) according to any of the preceding claims,
**characterised in that**
the contact between the housing (02) and a cycloidal disc (05, 06, 07) is made by rotatable teeth (23) formed by roller (24) and/or ball bearing elements.

10. Cycloidal transmission (01) according to any one of the preceding claims,
**characterised in that**
the internal toothing (22) has a lower actual number of teeth, starting from a desired number of teeth, the teeth (23) being identically designed and positioned at the actual number of teeth as at the desired number of teeth, so that at the actual number of teeth, in contrast to the desired number of teeth, one or more tooth gaps are located between adjacent teeth (23), in which one or more identical teeth (23) of the internal toothing (22) can be accommodated.

## Revendications

1. Réducteur planétaire à excentriques (01) comportant
- un boîtier (02) avec une surface intérieure (21) cylindrique disposée concentriquement autour d'un axe cylindrique qui est munie d'une denture intérieure (22),
- un arbre d'entrée (03) monté à titre rotatif autour de l'axe cylindrique (20) avec au minimum deux parties excentrées (31) présentant la même excentricité (32) uniformément autour de l'axe longitudinale (3) de l'arbre d'entrée (03) disposées de manière déformée,
- un arbre de sortie (04) monté à titre rotatif autour de l'axe cylindrique (20) où les axes longitidunales (30,4) de l'arbre d'entrée (03) et de l'abre de sortie (04) conïncident avec l'axe cylindrique (20),
- au minimum deux disques cycloïdiques (05,06,07) d'où chaque disque cycloïdique (05,06,07) est disposé autour d'un axe propre centrale rotatif (50,60,70) à titre rotatif sur une partie excentrée (31) disposant d'une denture extérieure (51,61,71) ratissant la denture intérieure (22) où l'axe rotatif (50,60,70) de chaque disque cyloïdique (05,06,07) est déplacé de l'excentricité (32) vers l'axe cylindrique (20) où le diamètre des disques cycloïdiques (05,06,07) est mesuré de sorte que leur denture extérieure (51,61,71) met en prise dans la direction de la denture intérieure (22) où dans sa direction le disque excentrique (31) sur le quel est disposé un disque cycloïdique (05,06,07), indiquant momentanément, tandis que dans la direction opposée la denture extérieure (51,61,71) est libre de la prise avec la denture intérieure (22) et
- au minimum un organe de sortie (08) est monté à titre rotatif autour de l'axe cylindrique (20) transformant les mouvements d'un disque cycloïdique ou de plusieurs disques cycloïndiques (05,06,07) dans leur répercussion dans le boîtier (02) dans un mouvement de rotation de l'arbre de sortie,
- la denture intérieure (22) du boîtier (02) présente un nombre élevé de dents dans un nombre entier impair que respectivement les dentures externes (51,61,71) des disques cycloïdiques (0(,06,07) et est caractérisé de sorte qu'
- un rapport de démultiplication uniforme i qui indique combien de rotations de l'arbre d'entrée (03) sont indispensables pour obtenir une rotation complète de l'arbre de sortie (04) où les dentures externes (51,61,71) des disques cycloïdiques (05,06,07) présentent respectivement un nombre pair de dents et le rapport de démultiplication i est uniforme, lorsque i pour i>1 et lorsque 1/i pour i<1 est un nombre pair au sens mathématique et
- les disques cycloïdiques individuels (05,06,07) des parties associées sous forme d'anneau (25,26) de la denture intérieure (22) où une partie sous forme d'anneau (25,26) est associée à un disque cycloïdique (05,06,07) et le réducteur planétaire à excentriques (01) comporte un nombre de parties (25,26) correspondant au nombre des disques cycloïdiques (05,06,07) où les dentures des disques cycloïdiques (05,06,07) disposées de manière déformée et mutuellement autour de l'axe cylindrique (20) des parties associées (25,26) sont disposées de manière déformée et mutuellement autour d"un décalage (d) de leur position angulaire autour de l'axe cylindrique (20) qui résulte par le biais du quotient de la différence du nombre des dents de la denture intérieure (22) et de la denture extérieure (51,61,71) du nombre des disques cycloïdiques (05,06,07) disposés dans différentes orientations de manière déformée et associés à un organe de sortie (08).

2. Réducteur planétaire à excentriques (01) selon la revenication 1 est caractérisé de sorte que le rapport de démultiplication uniforme correspond à une puissance de deux.

3. Réducteur planétaire à excentriques (01) selon l'une des revendications 1 ou 2 est caractérisé de sorte que les disques cycloïdiques (05,06,07) présentent respectivement des surfaces de référence (53,63) qui prévoient des surfaces de référence pour le transfert de couple des disques cycloïdiques (05,06,07) sur au minimum un organe de sortie où au minimum un organe de sortie (08) supporte avec une ou plusieurs surfaces de référence (53,63) au minimum d'un disque cycloïdique (05,06,07) dans une telle liaison active de sorte que les mouvements d'un disque cycloïdique ou de plusieurs disques cycloïdiques (05,06,07) dans leur répercussion dans le boîtier (02) dans un mouvement de rotation de l'arbre de sortie (04) et où partant de l'alignement relatif des surfaces de référence (53,63) de la denture extérieure (51,61,71) d'un disque cycloïdique (05,06,07) de deux ou de plusieurs disques cycloïdiques (05, 06, 07) disposés mutuellement autour de l'axe cylindrique (20) de manière déformée, les surfaces de référence (53,63) des disques cycloïdiques (05, 06, 07) disposées mutuellement de manière déformée d'au minimum un disque cycloïdique (06,07,05) restant en face de leur denture extérieure (51,61,71) autour du décalage (d) de leur position angulaire autour de l'axe rotatif (50,60,70).

4. Réducteur planétaire à excentriques (01) selon l'une des revendications précédentes est caractérisé de sorte que l'organe de sortie (08) est formé de deux corps rotatifs reliés par le biais d'organes d'écartement (80) où les disques cycloïdiques (05,06,07) du réducteur planétaire à excentriques (01) entre les corps rotatifs (81,82) de l'organe de sortie (08) sont disposés.

5. Réducteur planétaire à excentriques (01) selon l'une des revendications précédentes est caractérisé de sorte qu'au minimum un organe de sortie (08) est relié à l'arbre de sortie (04), comportant ce dernier ou couvert par ce dernier.

6. Réducteur planétaire à excentriques (01) selon l'une des revendications précédentes est caractérisé de sorte que le même nombre de disques cycloïdiques (05,06,07) sur chaque disque excentrique (31) de l'arbre d'entrée (03) est disposé à titre rotatif.

7. Réducteur planétaire à excentriques (01) selon l'une des revendications précédentes est caractérisé de sorte que les disques cycloïdiques (05,06,07) sont exécutés en qualité de roue d'entrée ou en qualité de disque à courbe.

8. Réducteur planétaire à excentriques (01) selon l'une des revendications précédentes est caractérisé de sorte que le contact entre le boîtier (02) et un disque cycloïdique (05,06,07) est produit par le biais de dents fixes (23).

9. Réducteur planétaire à excentriques (01) selon l'une des revendications précédentes est caractérisé de sorte que le contact entre le boîtier (02) et un disque cycloïdique (05,06,07) est produit par le biais de dents rotatifs (23) formées d'éléments à rouleaux (24) et/ou d'éléments de roulement à billes.

10. Réducteur planétaire à excentriques (01) selon l'une des revendications précédentes est caractérisé de sorte que la denture intérieure (22) présente, partant d'un nombre cible de dents, un nombre inférieure réel de dents où les dents (23) sont exécutées et positionnées à titre identique en cas du nombre réel de dents comme dans le cas du nombre cible de dents de sorte qu'un espace dentaire ou plusieurs espaces dentaires se situent dans le nombre de dents réel en comparaison avec le nombre de dents cible entre les dents voisines (23) où une dent ou plusieurs dents identiques (23) de la denture intérieure (22) peuvent trouver leur place.
